Europäisches Patentamt

(19) European Patent Office

Office européen des brevets

(11) Numéro de publication: **0 156 749**
**B1**

(12) **FASCICULE DE BREVET EUROPEEN**

(45) Date de publication du fascicule du brevet:
**17.11.88**

(21) Numéro de dépôt: **85430004.3**

(22) Date de dépôt: **04.03.85**

(51) Int. Cl.⁴: **A 01 G 31/02**

(54) **Procédé de culture automatisée sur supports extensibles mobiles et équipements permettant sa mise en oeuvre.**

(30) Priorité: **07.03.84 FR 8404313**
**27.02.85 FR 8503245**

(43) Date de publication de la demande:
**02.10.85 Bulletin 85/40**

(45) Mention de la délivrance du brevet:
**17.11.88 Bulletin 88/46**

(84) Etats contractants désignés:
**AT BE CH DE GB IT LI LU NL SE**

(56) Documents cités:
**FR - A - 2 132 218**
**FR - A - 2 296 370**
**FR - A - 2 298 934**
**US - A - 4 028 847**
**US - A - 4 211 035**
**US - A - 4 324 069**
**US - A - 4 337 986**

(73) Titulaire: **Bourgogne, Pierre Marcel, 2 bis rue des Ponchettes, F-06300 Nice (FR)**

(72) Inventeur: **Bourgogne, Pierre Marcel, 2 bis rue des Ponchettes, F-06300 Nice (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un procédé de culture, avec quelques unes des variantes possibles, de toutes sortes de végétaux sur différents supports extensibles permettant une automatisation extrèmement poussée, ainsi que la réalisation et le mode de mise en œuvre des équipements spéciaux nécessaires.

Les différents modes de culture connus actuellement sont essentiellement les suivants: Culture en plein champ et sans abri d'aucune sorte, en plein champ avec abris simples, en serres «Froides», en serres «Tièdes», en serres «Chaudes», et culture dite «Sans Sol» sur granulats divers-culture hydroponique (dans l'eau).

Ces différents modes de culture présentent des aléas et des difficultés spécifiques:

— Les cultures en plein champ sont soumises à tous les aléas climatiques et ne peuvent donc se réaliser en toutes saisons

— Les serres froides ne réduisent que très peu ces aléas.

— Les serres tièdes et chaudes sont plus efficaces mais n'ont qu'une productivité limitée au mètre carré, d'où l'importance considérable des frais de chauffage, main-d'œuvre

— Les cultures sans sol ou hydroponiques n'ont pu, pour les mêmes raisons, devenir réellement compétitives sauf exception. Le présente invention a pour but de remédier à ces inconvénients par la réduction extrèmement importante, à production égale, des surfaces cultivées nécessaires qui, de plus, sont productives toute l'année, et par l'automatisation de la plupart des façons culturales. La réduction des surfaces s'obtient de la manière suivante:

En culture traditionnelle, les semis ou plantations sont effectués en respectant l'espacement minimum nécessaire à la plante adulte prête à être récoltée, il peut bien sûr y avoir un «repiquage» intermédiaire qui réduit un peu la surface globalement occupée par chaque plant, mais cette opération est coûteuse en main-d'œuvre et entraîne un pourcentage non négligeable de pertes.

Certains moyens ont été utilisés pour réduire les surfaces plantées: les brevets KOSAN FR-A-2-2 298 934, FARNSWORTH FR-A-2-2 296 370, DAVIS US-A-4-028 847, HAUB US-A-4-337 986, décrivent des procédés applicables aux seuls plants cultivés dans des conteneurs individuels, les techniques utilisées sont différentes et ne sont pas conçues pour assurer une croissance régulière et automatique de l'espacement des plants; c'est à l'occasion des passages, peu nombreux, d'une phase de la culture à la suivante, que cet espacement s'accroit; les plants sont réellement au contact les uns des autres pendant une petite partie de leur croissance. Les brevets HYDROCULTURE INC FR-A-2-132 218, SMALL US-A-4-211 035 et FLAGG US-A-4-324 069 concernent des équipements de climatisation et de distribution de solution nutritive. L'objet de l'invention est la réalisation de «Supports Extensibles Mobiles» permettant d'adapter en permanence et automatiquement la surface occupée par un plant à ses besoins instantanés réels (et non à ses besoins futurs, c'est-à-dire au stade maturité/récolte) ainsi que la réalisation des équipements et matériels permettant d'atteindre cet objectif.

Selon l'invention, la culture se fait dans des bacs qui sont (non limitativement) de deux types principaux:

A — Bacs de culture en béton, métalliques, plastiques ou toute autre matière, contenant un granulat tel que: sable, gravier, argile expansée, grains de toutes natures: vermiculite, perlite, polystyrène, billes de verre etc. dénommés ci après sous le terme générique de «Granulats», selon la technique connue et bien au point, de la culture dite «Sans sol» ou «sur Sol artificiel».

L'invention consiste dans le fait que ce ou ces matériaux, au lieu d'être immobiles comme c'est toujours le cas dans les techniques connues, sont animés d'un mouvement de translation à vitesse croissante et réglable à volonté, à la fois dans le sens longitudinal et dans le sens transversal, et constituent un support mobile dont la surface s'accroît en même temps que les plants grossissent, de ce fait les plants occupent en permanence la surface qui leur est nécessaire et rien de plus.

Ce résultat est obtenu par l'injection, sous légère pression et en une multitude de points judicieusement répartis, au travers du fond des bacs par l'intermédiaire de conduits ou tuyères, rayonnantes ou directives, fixes ou éventuellement orientables, inclinées en direction du front du bac où se fait la récolte, de la quantité de granulats nécessaire pour maintenir au niveau choisi l'épaisseur de la couche de granulats servant de support aux plants, malgré la dilatation longitudinale et transversale engendrée par la poussée des granulats d'apport.

La résultante globale des poussées de tuyères assure la translation de l'ensemble de la masse des granulats en même temps que celle des plants vers le front de récolte, en un temps global, réglable à volonté, égal au cycle végétatif du plant cultivé depuis la plantation jusqu'à la récolte.

Les granulats sont imbibés, en permanence ou non, d'une solution nutritive dont de nombreuses formules sont connues. Ce système a l'avantage d'être à tendance autostabilisante en ce qui concerne l'épaisseur de la couche de granulats, en effet, pour un angle donné des tuyères par rapport à l'horizontale, tout accroissement de l'épaisseur de la couche tend à augmenter la poussée vers l'avant qui, elle, tend à réduire cette épaisseur, et inversement, il y a donc bien tendance autostabilisatrice.

Les cultures peuvent se faire en plein air, mais encore mieux, sous abri permanent où il est possible de réguler automatiquement tous les paramètres utiles: température, aération, hygrométrice, luminosité, composition de l'atmosphère etc. ceci d'autant plus que les surfaces nécessaires sont considérablement réduites.

L'invention est également remarquable en ce qui concerne les parois de l'abri qui sont disposées de telle façon que les surfaces de circulation non cultivées sont situées à l'extérieur des zones où l'atmosphère est chauffée, climatisée et optimisée en fonction des besoins des plantes, ce qui permet une économie considérable sur le chauffage et la climatisation en général.

Par ailleurs, les circulations peuvent également être facilement abritées si on le désire, mais ces zones étant indépendantes des zones cultivées, n'ont pas besoin d'être chauffées ni climatisées, de plus, comme elles entourent les zones cultivées, elles bénéficient d'un apport de calories gratuites, qui au lieu de se perdre comme à l'accoutumée, servent à tempérer les zones de travail et de circulation, qui en même temps, se trouvent mises à l'abri des intempéries.

Ce système à doubles parois améliore aussi considérablement le coefficient d'isolation thermique par rapport à celui d'une paroi simple; il permet également d'atténuer facilement les rayons solaires trop ardents à certaines heures et saisons en entretenant entre les deux parois une atmosphère plus ou moins transparente par l'insufflation de gaz ou fumées plus ou moins opaques, cette transparence pouvant être régulée automatiquement avec la plus grande facilité et pour un coût infime.

L'invention se rapporte également aux divers matériels, équipements et procédés qui permettent d'aboutir à ce résultat et plus particulièrement: bacs, tuyères et le matériel nécessaire à leur réalisation et à leur fonctionnement, systèmes de semis et plantations, tuteurage, portique pour façons culturales et traitements, cylindres récolteurs, stérilisation des granulats, elle se rapporte également à la forme et à la disposition des bacs et des installations en général.

B – Bacs de culture en béton, métalliques, plastiques ou en toutes autres matières, contenant une solution nutritive, comme ci-dessus, mais sans aucun granulat faisant office de support pour les plantes.

Dans ces bacs, les plants sont supportés par un réseau de paires de fils, métalliques ou autre, tendus radialement d'une extrémité à l'autre des bacs, dans le sens de leur longueur et animés ou non d'un mouvement de translation depuis le point de «semis ou plantation» jusqu'au «front de récolte».

Ce réseau de fils forme une sorte d'éventail comportant un très grand nombre de branches ou de paires de branches, chacune supportant une file de plants accrochés naturellement à ces fils par leurs racines et/ou leurs parties émergées selon l'espèce.

Du fait de la disposition rayonnante de ces fils, l'espace qui les sépare est très faible à l'origine (quelques millimètres) et beaucoup plus important à l'arrivée (jusqu'à quelques décimètres).

On conçoit donc aisément que les plants disposent au fur et à mesure de leur croissance et de leur translation vers le front de récolte, d'un espace de plus en plus important en largeur.

Il est possible de déplacer l'ensemble des plants comme décrit ci-dessus, mais en plus de les espacer progressivement les uns des autres tout au long de leur trajet, par glissement sur les fils support, en utilisant des rouleaux cannelés ou munis de sortes de doigts passant entre les fils, dont le rôle est de soutenir à niveau constant le réseau de fils malgré le poids des plants et d'espacer ceux-ci progressivement, cela nécessite un nombre important de rouleaux, chacun d'eux possédant une vitesse tangentielle différente et étant adapté à l'importance du volume des racines et parties immergées des plantes.

Une solution bien meilleure consiste à utiliser un réseau de paires de fils non mobiles, fortement tendus, rayonnants et divergents, à partir de la zone de semis ou plantation jusqu'au front de récolte, qui sert de support aux plants; ces fils sont soutenus de place en place par des supports fixés au fond des bacs eux-mêmes remplis de solution nutritive. Les graines ou jeunes plants sont mis en place manuellement ou par une machine automatique dans l'intervalle séparant les deux fils d'une même paire, les plants peuvent, au fur et à mesure de leur croissance, coulisser sur ce réseau de fils.

L'espacement des fils, à leur accrochage sur les bacs au front de récolte, est déterminé par le diamètre des plants arrivés à maturité; ce même espacement est déterminé, dans la zone de semis ou plantation, par la taille des graines, éventuellement préenrobées, ou des jeunes plants, et est en général de quelques millimètres.

Les racines des plants se développent sous le réseau de fils, et les parties aériennes par-dessus.

Les plants sont poussés et/ou tirés, à intervalles de temps réglables à volonté, par des «chariots» roulant sur des rails ou guides par l'intermédiaire de roues ou galets fixés à leur chassis servant lui-même de base à des structures comportant un support guide sur lequel coulissent des lames munies d'un ergot et dont le mouvement est commandé par une ou plusieurs vis sans fin à pas progressif mues par un système moteur quelconque. La première et/ou la dernière lame de chaque chariot comporte des prolongements minces susceptibles de passer entre les deux fils de chaque paire. Chaque structure peut être animée, en bloc, d'un mouvement ascendant ou descendant. En position haute les vis, dont le pas est progressif, poussent ou tirent les lames et en même temps les plants contre lesquels elles sont plaquées, d'un ou plusieurs rangs, vers le front de récolte, en même temps ceux-ci sont écartés les uns des autres (du fait de la progressivité du pas des vis), puis chaque structure est ramenée en position basse, les vis mises en rotation inverse, et les lames reprennent leur position initiale.

Enfin ces structures sont remises en position haute et le cycle peut recommencer.

Le rôle des prolongements minces est de pouvoir passer entre les supports de fils fixés au fond des bacs pour aller chercher les plants provenant du chariot précédant ou suivant, et les faire ainsi participer au mouvement d'ensemble de translation.

A chacun de ces cycles les plants avancent d'un ou plusieurs rangs et leur espacement relatif, dans le sens longitudinal s'accroit pour s'adapter aux besoins de croissance des plants, il s'accroit bien entendu corrélativement dans le sens transversal du fait de la divergence des fils.

Le gain de surface est ainsi maximum, identique à ce qu'il est dans la culture sur granulats.

Un liquide opaque, de densité inférieure à celle de la solution nutritive, et donc flottant sur celle-ci peut être prévu pour arrêter les rayons solaires et·

éviter ainsi la prolifération des microorganismes nuisibles.

C – Dans le procédé de culture sur supports mixtes utilisant à la fois des granulats et des réseaux de fils, on introduit dans des bacs, à fond simple et sans tuyères éventuellement, une certaine quantité de granulats, généralement de faible densité, qui constituent une couche d'épaisseur réglable à volonté dont la partie inférieure est immergée et la partie supérieure émergée, le rapport entre ces deux parties dépendant de la densité des granulats. Les plants sont plus ou moins enfoncés dans ces granulats. Des systèmes pousseurs et/ou tracteurs, analogues à ceux décrits ci-dessus, assurent la translation et l'espacement progressif des plants au fur et à mesure de leur croissance, la masse des granulats s'ouvrant, à chaque poussée, devant les plants et se refermant derrière eux sans qu'il y ait de déplacement global significatif de cette masse.

Les lames peuvent être découpées en forme de peignes pour faciliter le déplacement relativ plants/granulats, les dents de ces peignes peuvent être inclinées vers l'arrière de façon que les plants soient légèrement soulevés à chaque cycle et maintenus à leur niveau optimal malgré leur poids qui tend à les entraîner vers le bas.

Les avantages procurés par cette invention découlent essentiellement de ce que la surface nécessaire pour obtenir une quantité de plantes donnée est de très loin inférieure, et même sans commune mesure, avec celle qui est actuellement nécessaire en l'état des technqiues.

De ce fait, les investissements en terrain (surtout pour les cultures maraîchères et florales souvent situées à proximité des villes où le prix au mètre carré est très élevé) et en construction des abris sont réduits dans des proportions tout à fait considérables.

Les économies ainsi réalisées viennent en déduction du coût des bacs et du matériel nécessaire qui eux permettent une véritable industrialisation des cultures avec tous les avantages économiques que cela implique.

La disposition des bacs et de leurs abris, telle qu'elle est prévue dans les descriptions détaillées et les dessins, permet une réduction des surfaces non effectivement cultivées, les circulations se font en dehors des zones chauffées et climatisées, la conjonction de ces facteurs permet de réaliser des économies de chauffage tout à fait considérable ce qui est en facteur capital de réduction drastique des prix de revient.

En outre, la disposition des bacs est prévue, selon l'invention, de telle façon que les semis, plantations, traitements, récolte etc. puissent être effectués automatiquement avec une main-d'œuvre très réduite.

Du fait de la réduction considérable des surfaces immobilisées, il devient très rentable, avec des frais minimes, rapportés aux tonnages produits, de contrôler la totalité des facteurs favorisant la croissance des plants: température, hygrométrie, éclairement, ombrage, aération, composition de l'atmosphère (avec en particulier enrichissement en gaz carbonique), permettant ainsi une croissance optimale des végétaux, à l'abri des intempéries, des maladies, des insectes, et ceci pendant la totalité de l'année.

Du fait de ces conditions optimales les plants peuvent être beaucoup plus serrés qu'en culture traditionelle et disposés en quinconce plutôt qu'en ligne, nouveaux facteurs importants de réduction des surfaces.

Les temps d'arrivée à maturité sont également réduits de même que les pertes par intempéries, insectes, maladies. Les volumes journaliers de granulats à déplacer sont très faibles d'où dépense minime de force motrice; ces granulats peuvent être très facilement stérilisés, soit en permanence, soit à intervalles plus ou moins rapprochés, en divers points de l'installation, et sans aucune manutention spécifique.

La consommation en eau est elle aussi réduite dans des proportions énormes puisque la surface d'évaporation du support est divisée par un facteur supérieur à dix, ceci est un avantage considérable dans les régions où l'eau est rare et chère.

Une application tout particulièrement performante et valorisante de ce procédé est celle où sont utilisés les «Rejets» thermiques des centrales électriques, thermiques ou nucléaires (eaux de refroidissement, vapeur, air chaud).

La conjonction de ces différents facteurs, gains de surface, conditions végétatives éminemment favorables pendant toute l'année, réduction de la durée des cycles végétatifs, réduction drastique des frais de chauffage et de climatisation en général, de main-d'œuvre, aboutit à des gains de productivité absolument considérables dépassant très largement un facteur dix par rapport aux méthodes de culture traditionnelles.

L'invention est exposée ci-après plus en détail à l'aide de schémas et dessins.

Il est donné à titre d'exemple non limitatif plusieurs modes de réalisation de l'invention avec leurs variantes:

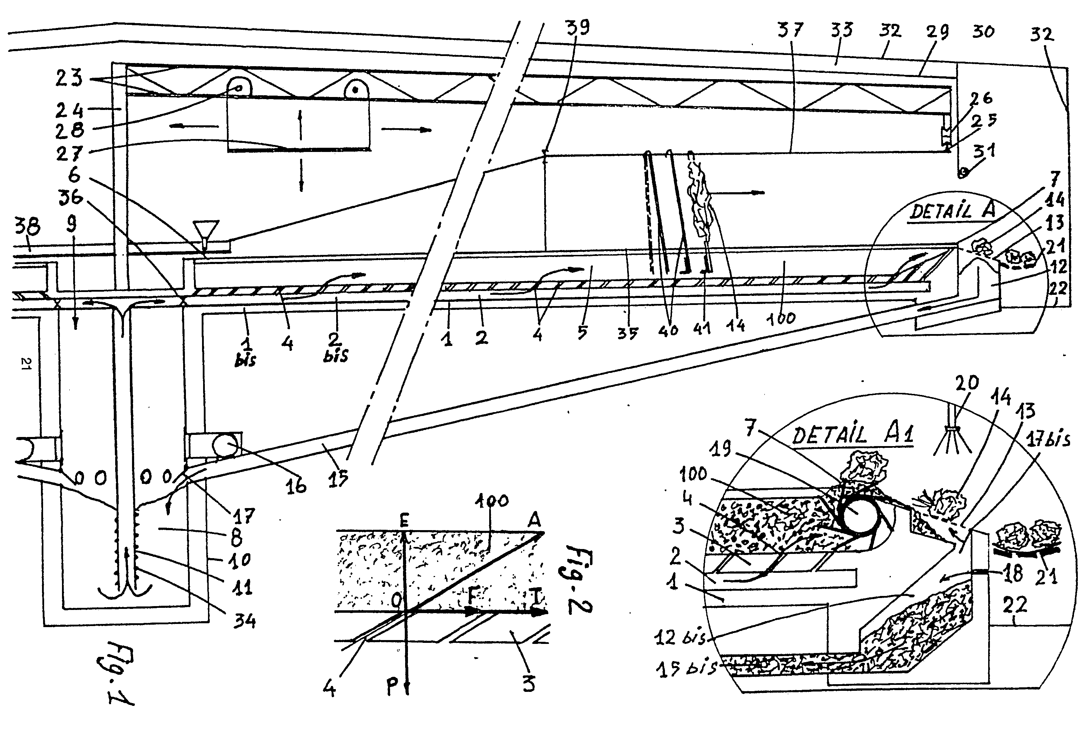

La figure 1 représente, en coupe, l'ensemble d'une installation dont diverses variantes sont données dans les figures suivantes:

Le détail A1 illustre, en coupe, et à plus grande échelle, une variante du détail A de la figure 1.

La figure 2 schématise les forces en présence permettant l'extensibilité du support.

La figure 3 montre la disposition d'ensemble, en plan, d'une installation comportant plusieurs bacs «tête bêche» disposés selon un ou des alignements rectilignes.

Le détail B1 de cette figure 3 montre, en plan et vu par dessus, à échelle agrandie, l'orifice, débouchant au fond des bacs dans le détail B, des tuyères qui permettent l'extensibilité du support des végétaux cultivés dans le cas de culture sur granulats.

Le détail B2 de cette figure 3 montre, en perspective et vu par dessus, à échelle agrandie, une variante de ces mêmes tuyères.

Les détails C de cette figure 3 représentent, à échelle agrandie, la disposition des lames assurant la translation et l'espacement des plants dans le cas de culture dans l'eau ou sur supports mixtes, selon les deux directions opposées à 180°.

Le détail D de cette figure 3 représente, en plan et vu par dessus, à échelle agrandie, la disposition des fils et supports de fils dans le cas de culture dans l'eau ou sur supports mixtes.

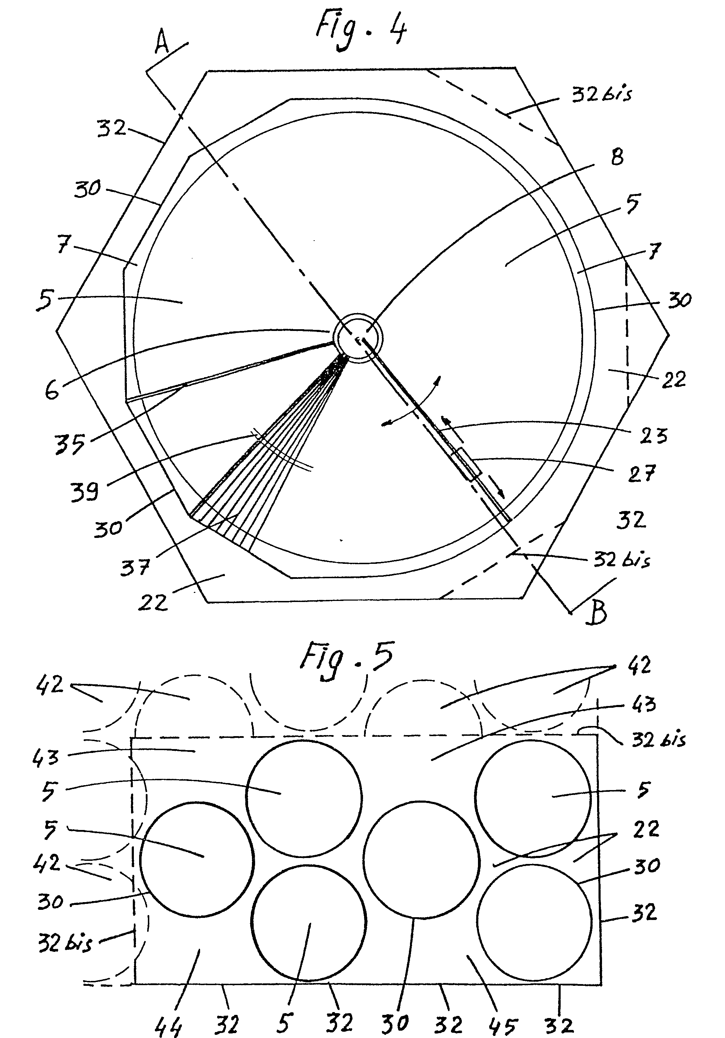

La figure 4 représente, en plan et vu par dessus, un bac de culture de forme circulaire et/ou polygonale.

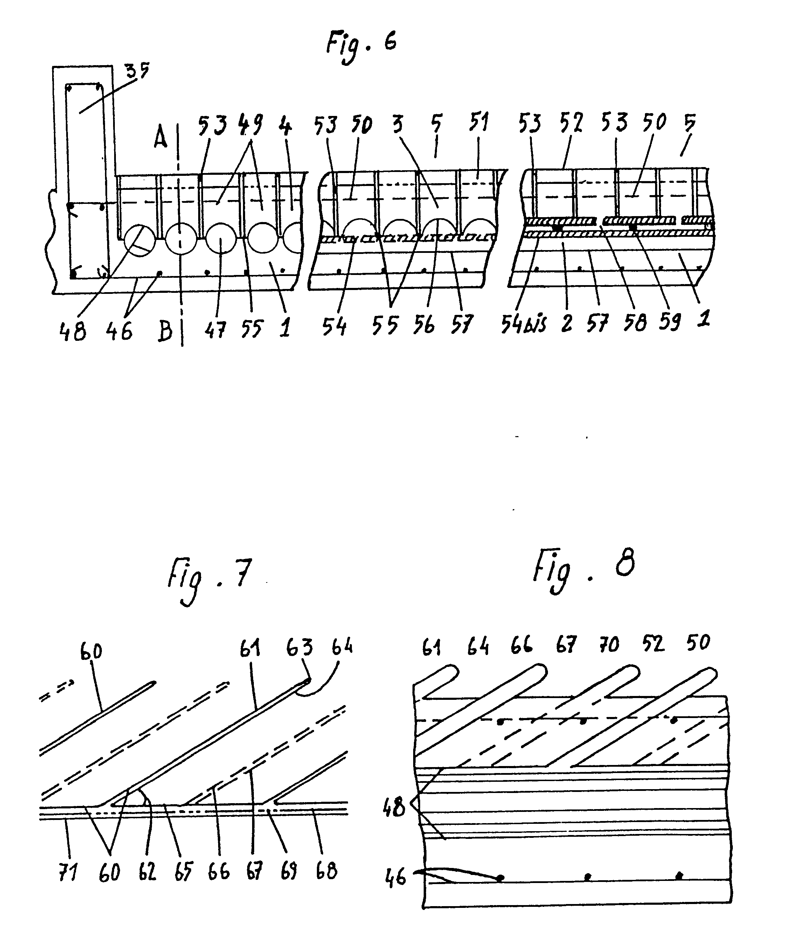

La figure 5 représente, en plan, l'ensemble d'une installation comportant plusieurs bacs comme ceux représentés figure 4 avec éventuellement un ou plusieurs bacs ou ensembles de bacs de forme trapézoïdales.

La figure 6 est une coupe, agrandie, sur le fond d'un bac, valable aussi bien pour les bacs illustrés fig. 3 que fig. 4.

La figure 7 est une vue, en coupe, avant gonflage, du moule permettant la réalisation des tuyères dont un aspect est donné dans le détail B1 de la fig. 3.

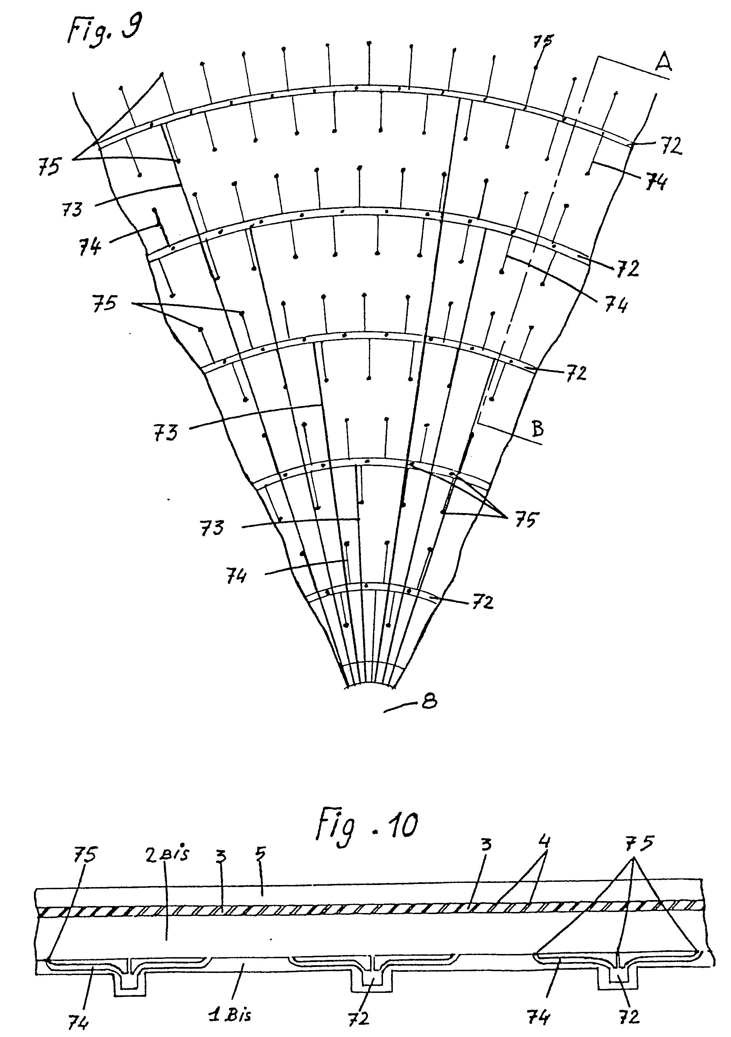

La figure 8 est une vue en coupe de ce même moule après gonflage.

La figure 9 est une vue en plan d'une variante aux bacs de culture dont la coupe est illustrée fig. 1. Cette variante permet la neutralisation des «pertes de charge» et est applicable à tous les types de bacs pour culture sur granulats, aussi bien ceux illustrés fig. 3 que fig. 4.

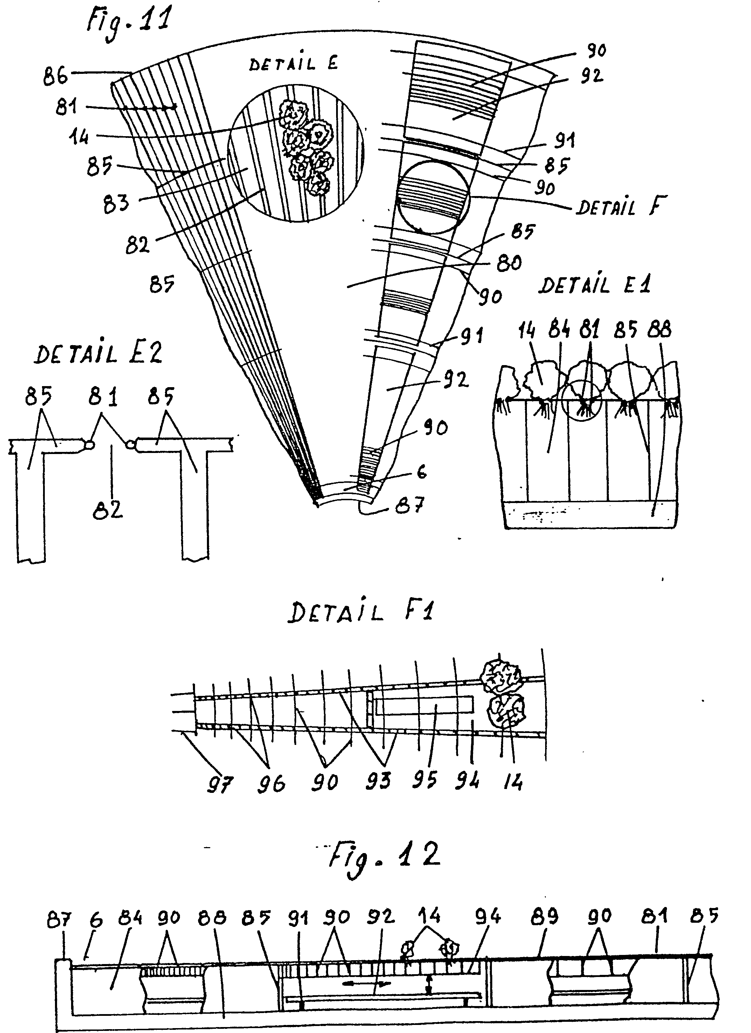

La figure 10 est une vue en coupe, agrandie, selon A–B de la fig. 9.

La figure 11 représente, en plan, une fraction d'installation pour culture dans l'eau ou sur supports mixtes.

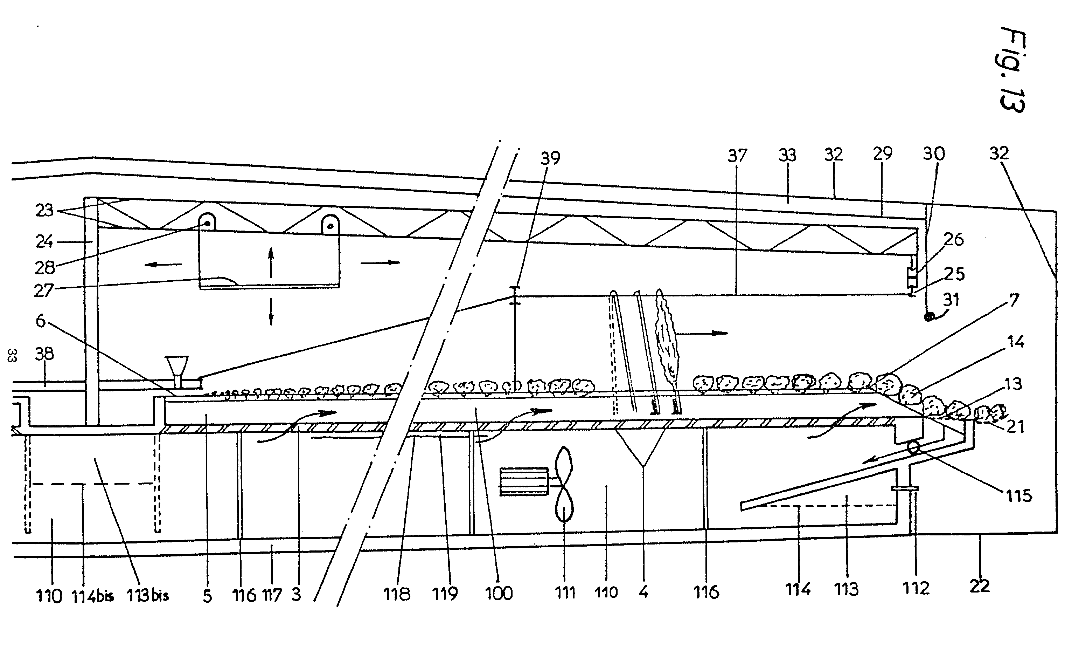

La figure 12 est une vue en coupe, agrandie, selon C–D de la fig. 11.

Le détail E1 représente, en coupe et à plus grande échelle, la disposition des plants, fils et supports de fils montrés en plan au détail E de la fig. 11.

Le détail E2 est une vue encore plus agrandie, en coupe, des fils et de leurs supports montrés au détail E1.

Le détail F1 représente, en plan et à plus grande échelle, la disposition d'un chariot muni de lames du détail F de la fig. 11.

La figure 13 est une vue en coupe d'une variante de la fig. 1. – La figure 1 est une demi-coupe A–B sur un bac en béton, réalisé conformément à l'invention, tel par exemple que celui représenté en plan fig. 4 et qui peut tout aussi bien être réalisé en bois, métal, matière plastique ou en toutes autres matières, avec ses équipements et l'abri le couvrant. Le fond (1) du bac est constitué d'une dalle en béton, armé de préférence, reposant soit sur le sol, soit surélevé sur des piliers. Il est surmonté d'un espace (2) dans lequel circulent, sous légère pression, les granulats (100) destinés à constituer le support mobile et extensible des plants (14); cet espace (2) est surmonté d'une deuxième dalle en béton (3), reliée de place en place à la dalle (1) par des boulons, des plots béton, des nervures etc.

Les granulats provenant de l'espace (2) sont poussés au travers d'une multitude d'orifices (4) dits «Tuyères», disposées en quinconce au travers de la dalle (3), jusque dans le bac proprement dit (5). Ils se stabilisent en épaisseur en fonction de l'angle formé par l'axe des tuyères avec l'horizontale et de la nature propre des différents granulats (100) qui peuvent être utilisés: densité, coefficient de frottement, rugosité, teneur en eau, angle du talus naturel, provenance (concassé, roulé, etc.).

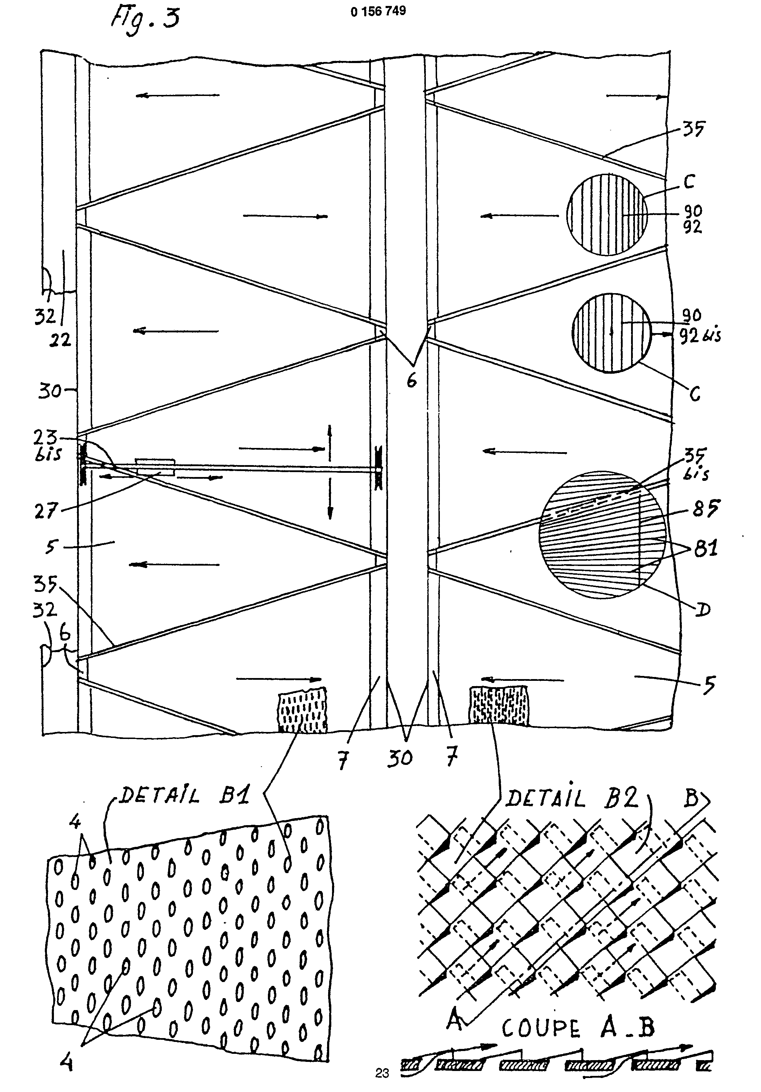

– La figure 2 schématise les forces en présence:

le poids des granualts (100), proportionnel à l'épaisseur, est représenté par le vecteur OP, la force de translation horizontale par le vecteur OT, la poussée des granulats issus des tuyères (4) par le vecteur OA se décomposant en OT–OE. Pour qu'il y ait translation des granulats, il faut et il suffit que OT soit supérieur à l'effort OF nécessaire pour vaincre le frottement des granulats (100) sur le fond et les parois des bacs (5), cet effort est en règle générale nettement inférieur au poids OP.

Pour une inclinaison déterminée de l'axe des tuyères (4) l'épaisseur des granulats (100) a tendance à augmenter sous l'afflux de ceux-ci provenant des tuyères (4), le vecteur OA augmente également et donc OT qui est la force de translation poussant les granulats (100) vers l'avant (7); cet accroissement d'effort de translation a tendance, lui, à faire diminuer l'épaisseur. A l'inverse, si l'épaisseur a tendance à diminuer, la force de translation vers l'avant diminue également, ce qui a pour résultat d'augmenter l'épaisseur.

Le système a donc une tendance autostabilisatrice.

– Revenons à la figure 1:

Les granulats (100) remplissant le bac (5) sur une épaisseur choisie sont animés d'un mouvement de translation depuis la zone de semis ou plantation (6) jusqu'au front de récolte (7) avec une vitesse croissant sensiblement selon une progression géométrique à très faible «raison», la croissance de cette vitesse étant elle-même proportionnelle au volume des granulats (100) injectés qui dépend de la pression, de la section des tuyères (4) d'injection et du temps, tous paramètres réglables à volonté.

Les graines ou végétaux plantés sur ces granulats sont donc eux aussi animés du même mouvement de translation d'ensemble. Par ailleurs, l'injection de quantités supplémentaires de granulats en une multitude de points tout au long de la translation provoque l'écartement progressif des plants les uns des autres, de la même façon que des points tracés sur une membrane de caoutchouc que l'on étire dans les deux sens s'éloignent les uns des autres.

Une caractéristique importante de l'invention est que le fond des bacs (5) peut être prévu en pente descendante depuis les zones de semis ou plantation (6) jusqu'aux fronts de récolte (7) pour faciliter la translation des granulats (100). La surface de ces granulats peut être elle aussi en pente ou horizontale. Dans le cas où cette surface est en pente, la solution nutritive qui remplit les bacs (5) peut ne plus être maintenue à un niveau déterminé, mais être distribuée par percolation et s'écouler au travers des granulats (100) à partir des zones de semis ou plantation (6) jusqu'aux fronts de récolte (7).

Ce qui précède détermine l'espacement longitudinal et progressif des plants, l'espacement transversal est déterminé par l'orientation des tuyères dont les axes sont disposés radialement, en définitive il y a bien espacement progressif dans les deux sens (voir fig. 3 détails B1, B2). Les tuyères (4) sont disposées en quinconce, leur disposition et leurs modes de réalisation sont détaillées fig. 3 détails B1 et B2 et figures 6, 7 et 8.

Les granulats (100) alimentant les tuyères (4) proviennent d'un réservoir ou silo de stockage (8), dont les parois (10) peuvent être en béton, métalliques, plastique ou en toutes autres matières, ce silo est mis sous pression d'air comprimé (9), seulement pendant la durée de fonctionnement de l'installation en mode «translation», en effet les volumes journaliers à déplacer étant très faibles, il suffit d'un très petit nombre d'heures de fonctionnement journalier. Le silo (8) est représenté enterré, il pourrait aussi bien être placé au-dessus du sol, la souplesse des installations fonctionnant à l'air comprimé autorisant toutes les dispositions.

La pression d'air (9) dans la partie supérieure du silo (8) refoule les granulats (100) dans la tubulure (11) au sommet de laquelle sont raccordées les entrées rayonnantes des espaces (2). De là, les granulats sous légère pression suivent le chemin décrit ci-dessus, c'est-à-dire passent au travers des tuyères (4), progressent dans les bacs (5) et arrivent au front de récolte (7) où ils se déversent dans l'espace (12) au travers d'un tamis incliné (13) qui retient les plants (14); de l'espace (12) ils descendent, par gravité, dans les conduits (15) pour rejoindre le silo (8). Pour éviter de donner une pente trop importante aux conduits (15), et donc d'enterrer profondément le silo (8), il peut être intéressant de vibrer ces conduits à l'aide de vibrateurs (16) ce qui facilite considérablement la descente de granulats (100). Des clapets (17) sont prévus pour empêcher le refoulement des granulats (100) dans les conduits (15) lors de la mise sous pression du silo (8).

Une variante à cette installation consiste à remplacer la mise sous pression des granulats (100) à l'aide d'air comprimé, par la poussée de vis sans fin, les granulats pouvant être approvisionnés, en provenance des fronts de récolte (7), par des tapis transporteurs ou tous autres moyens.

Une autre variante consiste à renvoyer les granulats (100) du front de récolte (7) au silo (8) sous pression d'air comprimé: voir détail A1: les granulats (100) tombent dans les trémies (12bis) qui peuvent être obturées par les clapets (17bis), ils sont alors poussés par une pression d'air comprimé en (18) dans les conduits horizontaux (15bis).

Ce même détail A1 de la fig. 1 montre une autre variante qui consiste à prévoir un cylindre récolteur à palettes (19) disposé au droit du front de récolte (7), dans sa rotation il entraîne les granulats (100) et les plants (14) et les pousse sur le tamis (13), sa vitesse de rotation est déterminée en fonction de la vitesse d'avancement des granulats (100) au front de récolte (7).

Un système d'arrosage automatique (20), fixe ou mobile, permet de nettoyer les plants (14) au fur et à mesure de leur récolte. Un tapis transporteur (21) peut être prévu, aussi bien dans l'exemple du détail A que dans celui du détail A1, pour évacuer la récolte; le «parage», la préparation et le conditionnement des plants pouvant également s'effectuer sur ce tapis (21). A défaut de tapis transporteur (21) pourront tout aussi bien être utilisés tous autres modes de manutention utilisant les aires de circulation (22).

Un portique tournant (23) autour d'un axe ou mât (24) et orientable (25) par l'intermédiaire de galets (26), ce chemin est supporté de place en place par des potelets fixés au bac (5). Dans le cas de bacs alignés (fig. 3), ce portique tournant (23) est remplacé par un portique (23bis) se déplaçant sur deux chemins de roulement rectilignes.

Une nacelle, réglable en hauteur (27), peut se déplacer grâce à des galets (28) sur les portiques (23, 23bis) balayant ainsi la totalité de la surface des bacs (5).

Une couverture, reposant sur une charpente ou un simple réseau de câbles tendus en (33), ou suspendue en dessous, peut être réalisée en films de matière plastique, en verre ou en toutes autres matières adaptées à cet usage, elle recouvre la totalité de la surface du bac (5).

Cette couverture (29) se retourne vers le bas, au droit des fronts de récolte (7), pour former les parois verticales (30) dont la partie inférieure (31) peut être ouverte, relevée, ou déposée, ou roulée comme représenté en (31) pour permettre l'évacuation des récoltes.

Cette disposition est une caractéristique très importante de l'invention car la surface couverte, destinée le plus souvent à être chauffée et cliamtisée, est réduite au strict minimum puisqu'elle n'englobe aucune surface non productive, ce qui est un facteur très important d'économies.

Une deuxième paroi (32), non indispensable, pourra cependant utilement être prévue, elle peut ou non couvrir les zones de circulation (22) et fait office de double paroi améliorant considérablement le coefficient d'isolation thermique.

Quand les parois (32) couvrent les zones de circulation (22) il y règne automatiquement une température agréable, bien qu'elles ne soient pas directement chauffées, mais elles bénéficient des calories gratuites diffusant au travers des parois (30).

Des systèmes d'aération peuvent bien entendu être prévus dans l'une et/ou l'autre paroi (29, 30, 32).

Des gaz plus ou moins opaques, tels que fumées, peuvent être injectés à volonté en (33) entre les parois (29) et (32) chaque fois que nécessaire, ce qui assurera une protection particulièrement économique et facile à moduler des plants (14) contre tout rayonnement excessif des rayons solaires.

La stérilisation des granulats (100) peut être assurée dans les meilleures conditions, soit en continu, soit aux moments choisis, en divers points de l'installation sans nécessiter aucune manipulation spéciale, par exemple au droit du front de récolte (7), dans les volumes (12, 12bis), dans les conduits (15, 15bis), dans le silo (8), la tubulure (11) en (34) . . ., cette stérilisation peut être effectuée par tous moyens en particulier: vapeur, résistances électriques (tel que représenté à titre d'exemple en (34), ozonisation, infrarouges, traitements chimiques etc.

Les semis ou plantations sont effectués en (6), schématisé fig. 1 par un entonnoir; il est possible d'utiliser des graines naturelles ou préenrobées, mises en place à écartement convenable soit manuellement, soit par une machine automatique, ou bien des graines fixées préalablement, à espacement convenable, sur des supports divers: papier, textile, non tissés, filets etc. qui pourront avantageusement être rapidement délitables.

Les temps de translation, ainsi que la vitesse, à partir de la zone de semis ou plantation (6), jusqu'au front de récolte (7), sont adaptés sans aucune difficulté au cycle végétatif des différents végétaux cultivés, simplement en faisant varier le temps journalier de mise sous pression du silo (8), et donc la durée journalière du temps de translation. Ce temps étant susceptible de varier de 0 à 24 heures, permet tous les cycles végétatifs envisageables de quelques jours à plusieurs mois et plus.

Différentes cultures de cycles végétatifs différents peuvent être faites en même temps dans un même bac, il suffit de prévoir des séparations rayonnantes (35) fig. 4, les temps et vitesses de translation différentes étant modulées grâce aux vannes (36) fig. 1.

La commande de ces différents organes peut être électrique, pneumatique ou autre, elle peut facilement être automatisée selon des techniques bien connues.

Dans le cas de cultures de plantes grimpantes, des tuteurs (40) sont prévus. Ils coulissent ou roulent sur des fils ou guides (37) (métalliques, nylon ou autre), accrochés à une extrémité sur une structure (38) et à l'autre sur le chemin de roulement (25), ils sont soutenus par un profilé (39) maintenu à bonne hauteur par des montants verticaux fixés de place en place sur les bacs (5). Les tuteurs (40) peuvent être simples ou doubles et comporter ou non une roulette à leur partie supérieure, ils sont plantés dans les granulats (100) juste en avant des plants (14) et peuvent ou non y être ligaturés, ils peuvent éventuellement être évasés à leur base de façon à présenter une plaque de poussée (41) importante qui facilite leur translation vers le front de récolte (7) en même temps que le plant.

Les dispositions de la figure 1 avec ses détails A et A1 sont dans leur ensemble valables quelles que soient les formes en plan des bacs (voir fig. 3, 4, et 5), les modifications les plus sensibles sont: – figure 3 relative aux bacs «tête bêche» disposés en alignement: le portique (23bis) au lieu de tourner autour d'un pivot central, roule sur deux chemins de roulement situés de part et d'autre de la file de bacs. Les silos (8) n'ont pas de position centrale privilégiée, ils peuvent être installés à l'endroit le plus adéquat en fonction du nombre de bacs (5), du nombre de rangées et de la longueur de celles-ci, il peut n'y en avoir qu'un seul ou plusieurs selon l'importance des surfaces cultivées. Pour la même raison l'alimentation des bacs (5) en granulats (100) pourra ne plus être rayonnante à partir d'un point central, mais provenir d'un réseau de distribution dont la disposition sera la mieux adaptée au plan d'ensemble.

La structure (38) devient inutile, les fils (37) pouvant être accrochés au deuxième chemin de roulement du portique (23bis). Dans la disposition des bacs (5) prévue par la fig. 3, le transport des granulats (100) en retour vers le silo (8) peut éventuellement se faire en utilisant la bande inférieure des tapis transporteurs (21), s'ils ne sont pas transportés sous pression d'air.

– La figure 3 montre les dispositions en plan d'une installation comportant plusieurs bacs élémentaires (5, 80) disposés «tête bêche» en une ou plusieurs rangées comportant chacune un nombre indéterminé de bacs (5) et (80).

On y retrouve essentiellement les mêmes éléments que sur la fig. 1 mais disposés parfois différemment:

Les points de semis ou plantation (6) sont rectilignes et non plus circulaires ou polygonaux.

Les circulations (22) sont elles aussi rectilignes, elles peuvent être couvertes ou non comme ci-dessus.

Le portique (23bis) comporte deux chemins de roulement.

Les séparations (35) sont similaires à celles de la fig. 4.

Les parois (30) séparent les zones chauffées de celles qui ne le sont pas. L'enveloppe externe (32) sépare l'ensemble de l'installation de l'air libre.

Des flèches indiquent la direction des translations des granulats (100) et des plants (14).

Le détail B1 au bas de la fig. 3 est une vue par dessus, très agrandie, du débouché des tuyères (4) telles qu'elles peuvent être réalisées, entre autres possibilités, dans une dalle béton (3), montrant la disposition radiale des axes de ces tuyères (4).

Le détail B2 au bas de la fig. 3 est une vue perspective par dessus et une coupe des tuyères (4) réalisées différemment, par exemple en tôle pliée comme dessiné, ou ondulée, ou en plastique moulé ou extrudé etc., les flèches indiquent le sens de circulation des granulats (100) et les aires en pointillé les orifices par lesquels ces granulats arrivent sous les tuyères (4).

– La figure 4 montre la disposition en plan d'un bac (5) circulaire ou polygonal. La moitié gauche de la figure correspond à un bac (5) polygonal qui peut avoir un nombre de côtés variable (ici 6 côtés pour un demi bac, soit 12 côtés pour le bac entier).

La moitié droite correspond à un bac (5) circulaire.

On retrouve essentiellement les mêmes éléments que sur la fig. 1 et en particulier:

La paroi (30) délimitant la zone cultivée, seule chauffée

La zone (5) occupée par les granulats (100) La zone de semis ou plantation (6)

La zone de récolte (7)

Les séparations rayonnantes (35)

Le profilé (39) soutenant les fils (37)

Les zones de circulation (22)

La paroi (32) séparant les zones non chauffées de l'extérieur dans le cas où le périmètre extérieur des circulations est un hexagone, et la même paroi (32bis) dans le cas où ce même périmètre est un dodécagone.

Le portique (23) et sa nacelle (27).

– La figure 5 représente en plan, et à petite échelle, la disposition d'ensemble d'une installation complète comportant plusieurs ensembles similaires à celui représenté fig. 4, et en particulier les bacs de culture (5), les parois (30) délimitant les seules zones chauffées et climatisées, les parois (32) séparatives de l'extérieur, les mêmes parois (32bis) qui n'existent plus quand sont réalisées les extensions (42) à l'endroit où elles sont dessinées, mais sont reportées plus loin.

Les zones (43), dont la forme ne permet pas l'implantation de bacs (5) tels ceux de la fig. 4, peuvent recevoir des bacs trapézoïdaux, tels ceux de la fig. 3, ou des bacs circulaires ou polygonaux mais plus petits (par exemple pour la cutlure de végétaux à cycles très courts).

Les zones telles que (44) peuvent servir de magasins, d'ateliers, d'aires de conditionnement et d'expédition etc. Des zones telles que (45) peuvent servir de bureaux.

Dans le cas où plusieurs bacs (5) circulaires ou polygonaux sont disposés comme indiqué fig. 5, la surface totale immobilisée est proportionnellement réduite puisqu'une grande partie des zones de circulation (22) est commune à au moins deux bacs (5).

– Les figures 6, 7, 8 représentent en coupe, parmi de nombreuses autres possibles, trois modes de réalisation pratiques et économiques, des dalles de béton (1, 3) percées des tuyères (4). La dalle inférieure (1) est légèrement armée des aciers à béton (46) longitudinaux et transversaux, elle peut être coulée en même temps que les séparations (35).

Des évidements cylindro-elliptiques (47) sont réservés au coulage du béton à l'aide d'éléments gonflables (48) formant moules, représentés en détail fig. 7 et 8.

Sur la partie supérieure de ces éléments gonflables sont fixés d'autres éléments, également gonflables (49), inclinés, destinés à réserver dans la masse de la dalle supérieure (3) des évidements (4) appelés tuyères. Des aciers (50) arment cette dalle (3), ils sont ondulés dans un plan horizontal pour passer entre les éléments (49) disposés en quinconce, la partie supérieure de ces éléments (49) dépasse en (51) la surface du béton (52). Cette surface est égalisée lors du coulage par vibration, après prise du béton et extraction des moules dégonflés, cette surface (52) peut avantageusement être poncée pour faciliter le glissement et la translation des granulats (100).

Les éléments gonflables (48, 49, 51) sont réalisés à l'aide de films plastiques ou de tissus plastifiés assemblés entre eux par collage ou soudures, un peu à la façon des matelas pneumatiques, les zones de soudure ou collage étant représentées en (53).

Dans la variante représentée au milieu de la fig. 6, la partie inférieure de l'élément gonflable (48) est remplacée par un panneau rigide (54) sur lequel est fixé, aux emplacements (55) la partie supérieure de l'élément (48) muni comme précédemment des éléments gonflables inclinés (49). La dalle inférieure (1) est coulée en premier; après durcissement du béton, le panneau (54), équipé comme il vient d'être dit, est posé sur le béton avec interposition, non représentée ici, d'un calage d'épaisseur facile à éliminer (par exemple des boudins gonflables).

La partie supérieure de l'élément (48) est alors gonflée, en même temps que les éléments inclinés (49); les aciers (50) mis en place et le béton coulé.

Les évidements ainsi réservés ont leur paroi supérieure (56) en forme de voûtes accolées et leur paroi inférieure (57) plane.

Dans la deuxième variante représentée dans la partie droite de la fig. 6, les deux parois, inférieures et supérieures, des évidements (2) sont planes, la dalle inférieure (1) est réalisée comme dans la variante précédente. Un panneau (54bis) est constitué de deux plaques séparées l'une de l'autre par des baguettes (59) de quelques millimètres d'épaisseur, réservant des espaces (57).

Sur la plaque supérieure est collé comme précédemment le demi élément gonflable (48) équipé des mêmes éléments inclinés (49), le collage étant fait sur toute la surface et non plus seulement dans les zones (55). Des trous (58) sont pratiqués dans la plaque supérieure au droit de chaque tuyère.

De l'air sous légère pression est introduit dans l'espace (57) entre les plaques rigides et gonfle les éléments (49). L'ensemble est posé sur un calage en hauteur facilement amovible, puis les aciers (50) sont mis en place et le béton coulé. Après durcissement du béton, l'ensemble est retiré après dégonflage et élimination du calage; bien entendu des liaisons sont prévues du place en palce entre dalle (1) et dalle (3).

Il peut être avantageux de préfabriquer l'ensemble des bacs (5) ou seulement les dalles (3).

– La figure 7 représente la manière dont peuvent être réalisés les éléments gonflables (48, 49) dont il est question ci-dessus.

Une feuille continue de plastique ou tissu plastifié (60), de grande longueur, ou similaire, est pliée de la façon suivante: une partie inclinée (61) (formant un angle (62) égal à l'angle formé par les tuyères (4) avec l'horizontale) se poursuit jusqu'en (63) où la feuille se replie sur elle-même suivant (64), puis redevient horizontale en (65), elle se continue sur une nouvelle partie inclinée (66), la suite se répétant de la même façon un grand nombre de fois sans aucune interruption.

Il est ainsi formé une suite de plis (61 à 64), sans solution de continuité de la feuille (60), séparés par des intervalles plans (60, 65...).

Des collages ou soudures sont effectués, perpendiculairement à ces plis, tels qu'on le voit en (53) fig. 6, délimitant ainsi des zones rectangulaires à doubles parois, inclinées et fermées à leur extrémité par le repli (63).

On découpe alors une sur deux de ces zones rectangulaires, en alternant d'un rang au suivant, pour obtenir une disposition des tuyères en quinconce.

La largeur des collages ou soudures est la plus faible possible, pour éviter que ces zones ne restent coincées dans le béton après durcissement.

Une feuille (68), de même nature que la précédente, comportant des trous (69), de section légèrement inférieure à celle des tuyères (4), situés en quinconce au droit de chaque zone rectangulaie conservée, et donc de chaque tuyère, est collée ou soudée sous toutes les surfaces (61, 65) et suivantes, sauf bien entendu sur la surface (69). L'ensemble ainsi constitué est utilisé pour la première variante représentée au milieu de la fig. 6 après collage, dans les zones (55), sur le panneau (54). De l'air, sous légère pression, est insufflé entre le panneau (54) et la feuille (68), tendant à gonfler cette dernière, puis passe par les trous (69) et gonfle en même temps tous les plis (61 à 64) et suivants.

Chacun de ces plis, une fois gonflé, constitue un moule pour une tuyère (4), comme représenté en (70) fig. 8 qui est une coupe A–B sur la figure 6, mais à échelle double pour plus de lisibilité.

Le même ensemble que ci-dessus, constitué des feuilles (60 et 68), assemblées comme précédemment, est utilisé dans la deuxième variante à droite de la fig. 6, la seule différence étant qu'il est collé sur toute la surface, et non plus seulement dans les zones (55), du panneau (54bis), sauf bien entendu au droit des trous (69).

De l'air sous légère pression est insufflé dans les espaces (57) et passant par les trous (58) et (69), gonfle les plis (61 à 64) et suivants, comme précédemment, pour servir de moules aux tuyères (4).

Pour réaliser les évidements (47) de la partie gauche de la fig. 6, on utilise le même ensemble que ci-dessus, constitué des feuilles (60) et (68), et sous cette feuille (68) on colle ou soude, tout au long des zones (55), une troisième feuille (71).

De l'air sous légère pression est insufflé entre les feuilles (68) et (71), provoquant la formation de boudins servant de moules aux évidements (47), puis passant par les trous (69) gonfle également tous les plis (61 à 64) et suivants, comme précédemment, pour servir de moules aux tuyères (4).

– La figure 8 représente les éléments gonflables décrits ci-avant, mais cette fois-ci en position gonflée, c'est-à-dire tels qu'ils sont utilisés pour servir de moules aux évidements (47) et aux tuyères (4).

– Les figures 9 et 10 représentent une importante variante à certaines dispositions décrites figure 1 et concerne plus particulièrement l'alimentation des tuyères (4) en granulats (100) à partir du silo (8).

Les granulats (100) ont à parcourir des distances variables entre leur sortie de la tubulure (11) et leur arrivée au front de récolte (7) en passant par les tuyères (4).

Des «pertes de charge» plus ou moins importantes en résultent (de même que la pression de l'eau diminue en fonction de la longueur de canalisations parcourues) qui peuvent conduire à des débits sensiblement différents entre les tuyères (4) situées près de la zone de semis ou plantation (6) et celles proches du front de récolte (7). On peut y remédier en faisant varier progressivement la section des tuyères (4), mais ceci risque de ne pas être toujours efficace.

La solution décrite fig. 9 résout elle entièrement cette difficulté.

Cette figure 9 est une vue en plan, à mi-épaisseur de la dalle (1) de la fig. 1 qui est modifiée comme montré en (1bis) de la fig. 10 qui est une coupe, à plus grande échelle, selon A–B de la fig. 9.

Des conduits secondaires (72), de forte section, circulaires ou rectilignes, selon la forme des bacs (5) tels qu'ils sont représentés fig. 3 et 4, et en tous cas sensiblement parallèles au front de récolte (7), sont alimentés en granulats (100) par des conduits primaires (73) issus directement du ou des silos (8).

Sur les canalisations (72), qui peuvent être en forme de tubes ou de caniveaux, et que nous appellerons ci-après «caniveaux», sont branchés des conduits tertiaires (74) qui débouchent par des orifices (75) au travers de la dalle (1bis) et sur sa face supérieure. Les granulats vont dans l'espace (2bis) qui est ici sensiblement plus important en hauteur que l'espace (2) de la figure 1, et s'y accumulent. Les granualts arrivent donc du silo (8) par les conduits (73) dans les caniveaux (72), et de là, se dirigent vers l'espace (2bis) grâce aux conduits (74), puis traversent la dalle (3) par les tuyères (4) et constituent alors, dans les bacs (5), le support extensible des plants (14).

L'espacement des conduits (73) est calculé pour fractionner les caniveaux (72) en zones de longueur relativement réduite afin d'uniformiser au maximum les pressions en tous points du volume de ces caniveaux qui forment ainsi un volume tampon régulateur. La section de ces caniveaux est nettement supérieure à la somme des sections des orifices (75) alimentés par un tronçon de caniveau de longueur égale à la distance séparant deux conduits (73), ce qui est important pour obtenir un débit égal de tous ces orifices (75).

La distance entre le dessus de la dalle (1bis) et le dessous de la dalle (3), délimitant l'espace (2bis) est calculée de façon à créer, là aussi, un important volume tampon égalisant les pressions en tous points de la sous face de la dalle (3) et donc à l'entrée de toutes les tuyères (4), cette hauteur dépend de la nature intrinsèque des granulats utilisés, de leur angle de talus naturel, du coefficient de frottement etc.

De cette façon, les granulats (100) affluent au droit de chaque tuyère (4) avec une vitesse et une pression uniformes dans les bacs (5).

– La figure 11 se rapporte à la réalisation d'une installation pour culture dans l'eau ou hydroponique.

La forme en plan des bacs (80) est la même que celle des fig. 3, 4 et 5, le front de récolte (7) étant à volonté, comme précédemment, circulaire, polygonal ou rectiligne.

Les équipements de ces bacs (80) sont analogues à ceux des bacs (5), tels les portiques (23, 23bis), les nacelles (27), les tuteurs (40) et leurs supports (37, 38, 39).

La disposition des abris (29, 30, 32) est identique, de même que les circulations (22).

Par contre les dalles (1, 1bis, 3) sont remplacées par une simple dalle sans tuyères (4).

Les volumes (12, 12bis), les conduits (15, 15bis) et le silo (8), ainsi que leurs équipements, sont supprimés.

La figure 11 montre en plan une fraction d'un bac (80), ainsi qu'une faible partie de la nappe de fils (81) rayonnants et fortement tendus entre la zone de semis ou plantation (6) et le front de récolte (7). Ces bacs (80) sont étanches et fermés par des parois verticales (86, 87) à leurs extrémités.

La nappe de fils (81), métalliques ou en autre matière, est constituée de fils groupés par paires comme représenté à plus grande échelle aux détails E, E1, E2.

Les graines ou jeunes plants sont mis en place en (82), entre les deux fils d'une même paire, dans la zone (6), les paires sont séparées entre elles par les espaces (83). La distance d'axe en axe entre deux paires de fils (81) consécutives, à leur acrochage au front de récolte (7), est égale au diamètre moyen d'un plant arrivé à maturité prêt à être récolté; cette distance varie, selon les espèces cultivées de quelques centimètres à quelques dizaines de centimètres. Cette même distance est égale à quelques millimètres en (6).

Chaque plant est donc maintenu entre les deux fils d'une même paire, les racines s'épanouissent dans une solution nutritive (84), et la partie aérienne se déploie au-dessus de la nappe de fils (81).

Une fine couche superficielle d'un liquide opaque (89), de densité inférieure à celle de la solution (84), peut être prévue pour arrêter le rayonnement solaire et éviter la prolifération d'algues et microorganismes nuisibles.

Les plants (14) peuvent être alignés, ou mieux disposés en quinconce. Les graines, éventuellement préenrobées, ou les jeunes plants, sont déposés comme précédemment dans les zones (6) et sont poussés progressivement par tous systèmes à vitesse et espacement progressifs des plants dont un exemple, entre de nombreux autres possibles, est donné plus en détail fig. 12 et son détail F1.

De supports (85) sont prévus de place en place pour empêcher les fils (81) de trop fléchir sous le poids des plants (14). Différentes espèces de végétaux peuvent éventuellement être cultivées dans un même bac à condition d'espacer convenablement entre elles les paires de fils (81). Les supports (85) sont prévus selon détail E2 pour ne pas gêner la translation des plants (14).

Les tuteurs (40) éventuels coulissent, comme précédemment sur les fils (37) sous la poussée des plants (14) auxquels ils peuvent être ligaturés, leur partie basse glisse entre les deux fils (81) d'une même paire.

Un système pousseur et/ou tracteur, selon l'invention, couvre un secteur de bac (80) dont l'angle au centre peut être quelconque, mais le système sera d'autant moins coûteux que cet angle sera plus faible, ce secteur est représenté sur la partie droite de la fig. 11, il s'étend de la zone de semis ou plantation (6) jusqu'au front de récolte (7), il est divisé en tronçons concentriques séparés par les alignements des supports (85) des fils (81). Chaque tronçon de système pousseur compris entre deux alignements de supports (85) constitue un ensemble autonome (92) en forme de chariot roulant par l'intermédiaire de galets sur des rails ou guides (91); chaque chariot roule sur les guides (91), dans un sens ou l'autre à volonté, et l'ensemble des chariots (92) (il y en a quatre sur la fig. 11, mais il peut y en avoir plus ou moins) peut ainsi balayer la totalité de la surface des bacs (80), que ceux-ci soient circulaires, polygonaux ou trapézoïdaux. Les chariots (92) peuvent être munis d'un moyen de propulsion autonome, ou être tirés par des câbles etc.

La base de chaque chariot est ainsi constituée par un chassis (92) solidaire de galets, ce chassis sert de support à une structure, représentée plus en détail en F1, qui peut être soulevée ou abaissée d'une hauteur correspondant sensiblement à celle des racines les plus profondes que l'on ait à cultiver.

Cette structure est composée essentiellement d'un grand nombre de «lames» mobiles (90) dont le rôle consiste à pousser les plants et à les espacer les uns des autres.

Les lames (90) sont reliées entre elles par une ou plusieurs vis sans fin (93), dont la caractéristique essentielle est d'avoir un pas progressif, et qui sont fixés par rapport au chassis (92). La progression de ce pas, ainsi que celle de l'espacement entre lames (90) est très exagérée sur le détail F1 afin d'être perceptible à la petite échelle adoptée, en réalité cette progression est extrêmement faible et est égale à l'accroissement de l'espace nécessaire à chaque plant (14) au fur et à mesure de sa translation de (6) à (7).

Les lames (90) coulissent sur un support (94), elles comportent un ergot (96) ou tout autre système similaire, pénétrant au fond du filetage des vis (93), elles sont séparées entre elles par des espaces croissants, variables selon les végétaux cultivés.

Quand les vis (93) sont mises en rotation elles font coulisser les lames (90) sur le support (94) d'une ou plusieurs rangées à volonté, et en même temps l'espace séparant chaque lame de sa suivante s'accroît du fait de la progressivité du pas, il y a donc un mouvement de translation d'ensemble et en même temps un espacement progressif des lames (90) entre elles. Les vis (93) sont mues par tout système moteur (95). La dernière et/ou la première lame (90) de chaque chariot (92) est remplacée par un «prolongement mince» (97) susceptible de passer entre les fils (81) d'une même paire pour saisir le plant (14) provenant du chariot (92) précédant ou le pousser vers le chariot suivant, de part et d'autre d'une file de supports (85). Ce prolongement mince peut, si on le désire, intéresser plusieurs plants (14) au lieu d'un seul. Le mode de fonctionnement de l'installation est le suivant:

une structure avec son guide (94), ses lames (90) et les prolongements minces (97), réglés à l'espacement convenant au végétal cultivé, est positionnée sous les rangées de plants (14) intéressés, elle est en un premier temps soulevée jusqu'à ce que le bord supérieur des lames (90) vienne au contact des fils (81); en un deuxième temps les vis (93) sont mises en rotation du nombre de tours nécessaires à faire avancer l'ensemble d'une longueur égale à celle séparant deux rangées consécutives de plants (14), les lames et prolongements minces entraînent les plants (14) dans leur mouvement, ainsi qu'éventuellement leurs tuteurs. Les plants (14) glissent sur les fils (81) tout en acquérant l'espacement qui leur est nécessaire.

En un troisième temps la structure est redescendue à son niveau initial et en un quatrième temps les vis (93) sont mises en rotation inverse et l'ensemble revient d'une rangée en arrière, c'est-à-dire à sa position exacte d'origine, et le cycle peut recommencer.

Tous les chariots étant animés de mouvements similaires, on voit que l'ensemble des plants (14), dans le secteur concerné, a avancé d'un rang.

On peut aussi bien traiter plusieurs rangées de plants (14) en même temps au lieu d'une seule, l'ensemble du processus restant le même.

Après avoir «traité» ainsi un secteur, l'ensemble des chariots (92) se déplace sur les rails guides (91) pour traiter le secteur suivant et ainsi de suite jusqu'à l'achèvement du traitement de la totalité des bacs (80).

Dans le cas de culture dans l'eau avec bacs (80) alignés et trapézoïdaux comme représenté fig. 3, les dispositions ci-dessus sont légèrement modifiées:

Les séparations (35) n'ayant pas de raison d'être, sont supprimées, un simple intervalle (35bis), de quelques centimètres de largeur, vide de fils (81) et de plants (14) est prévu pour séparer entre elles deux zones trapézoïdales consécutives et disposées «tête bêche» dans lesquelles les directions de translation des plants (14) sont opposées. Un groupe de chariots (92), en tous points similaires à celui représenté au détail F1, à l'exception des lames (90) qui sont ici rectilignes, assure la translation et l'espacement des plants (14) successivement dans toutes les zones trapézoïdales des bacs (80) situées dans un même alignement et dont le sens de translation est orienté dans la même direction, c'est-à-dire une sur deux.

Un autre groupe de chariots (92bis), identiques, mais orientés à 180° par rapport aux précédents, assure la translation et l'espacement des plants (14) sur le reste de la surface de ces mêmes bacs (80), là où le sens de la translation est inverse.

Après avoir «traité», les unes après les autres, l'ensemble des zones le concernant, le groupe de chariots (92) revient à sa position d'origine.

L'autre groupe de chariots (92bis) entre alors en action pour traiter l'ensemble des zones le concernant, les unes après les autres, puis reprend également sa position d'origine. L'ensemble de la surface d'un même alignement de bacs (80) est ainsi traité avec seulement deux groupes de chariots (92, 92bis) identiques mais orientés à 180°. On pourrait n'utiliser qu'un seul groupe de chariots, mais dans ce cas il est retourné à 180° soit dans les bacs (80) soit hors de ces bacs.

Les groupes de chariots (92, 92bis) roulent bien entendu dans ce cas sur des rails ou guides rectilignes, tous les autres mouvements sont similaires à ceux des chariots (92) équipant les bacs circulaires ou polygonaux.

La totalité de ces opérations peut, sans aucune difficulté, être effectuée automatiquement par toutes les commandes mécaniques, électriques, hydrauliques, électroniques etc. et il est possible de faire varier les différents paramètres tels que vitesse, fréquence, durée, répétitivité, etc. de ces divers mouvements pour les adapter au mieux au type de végétal cultivé, permettant ainsi, comme précédemment, une automatisation totales des installations.

Enfin, les rendements au mètre carré sont similaires à ceux de la culture sur granulats (100).

– La figure 12 est une vue en coupe, agrandie, de la fig. 11.

Une importante variante, caractéristique de l'invention, consiste à répandre, sur la solution nutritive (84), contenue dans les bacs (80), des granulats (100), de faible densité, et en tous cas inférieure à celle de la solution (84), dont il existe une variété considérable tels que liège en granulés, billes de polystyrène expansé, granulés de ponce, pouzzolanes etc., en épaisseur convenable.

Les graines ou jeunes plants (14), déposés en (6) sur cette couche de granulats (100), commencent à y développer leurs racines qui par la suite se prolongent éventuellement dans la solution (84). L'épaisseur de la couche de granulats (100) est calculée de façon à ce que les parties normalement émergées des végétaux le restent également dans cette méthode culturale.

Les plants (14) sont poussés du point de semis ou plantation (6) jusqu'au front de récolte (7) par un système de chariots (90 à 97) comme ci-avant, ou par tout autre système aboutissant au même résultat. Il est utile, dans cette variante, de découper les lames (90) à la façon d'un peigne, afin que les granulats (100) puissent passer entre les dents de ce peigne, sans que les plants (14) eux ne le puissent. Il est également bon d'incliner les dents de ce peigne vers l'arrière, de cette façon, en même temps qu'elles poussent les plants (14) vers l'avant, elles ont tendance à les soulever afin de contribuer à les maintenir à un niveau constant malgré que leur poids tende à les attirer vers le bas. Un avantage de cette variante est de faire écran aux rayons solaires et d'empêcher la prolifération d'algues ou microorganismes nuisibles.

Dans les cas où le poids des parties émergées des plants (14) ne représenteront pas un pourcentage trop important du poids total des plants (14) cultivés, il sera possible de supprimer purement et simplement le réseau de fils (81) et leurs supports (85) ce qui simplifiera d'autant les bacs.

L'épaisseur de la partie immergée de la couche de granulats (100) variera en fonction de la densité de ceux-ci, et de l'épaisseur de la couche émergée, elle pourra donc être choisie à volonté ce qui permettra l'optimisation la meilleure selon la nature des végétaux cultivés. Cette couche de granulats (100) contribue au maintien en position verticale des végétaux qui de toutes façons, étant nettement moins espacés qu'en culture traditionnelle, se calent les uns les autres puisque, le plus souvent, ils sont au contact direct les uns des autres.

– La figure 13 est une vue en coupe d'une très importante variante de la fig. 1, concernant une amélioration de la circulation des granulats, en réduisant considérablement leur parcours.

Dans cette variante au procédé de culture sur granulats (100) tel que décrit au chapitre A pages 13 et 14, les principales dispositions qui diffèrent de celles représentées fig. 1 sont les suivantes: le silo (8) avec ses dispositifs annexes (9), (10), (11), (15), (16), (17), (34), ainsi que les espaces (2, 2bis) sont confondus en un seul réservoir (110), la dalle (1) est remplacée par le fond (117) du réservoir.

Les granulats et la solution nutritive contenus dans le réservoir (110) peuvent être en concentration relatives variables, dans le cas d'utilisation du sable on pourra utilement avoir environ 40% de sable pour 60% des solution (en poids); ces chiffres pouvant varier dans de très fortes proportions ne sont donnés qu'à titre d'indication, ces proportions peuvent varier également très fortement avec des granulats légers.

Au repos, le niveau (118) du mélange pourra être sensiblement proche de celui de la sous face de la dalle (3). Un ou plusieurs systèmes d'agitation peuvent mettre ce mélange en suspension homogène, tel par exemple, à titre non limitatif, une ou plusieurs hélices (111) utilisées seules et/ou bien avec insufflation d'air comprimé en partie basse du réservoir en un grand nombre de points.

De l'air comprimé peut être introduit dans le réservoir (110) pour en faire monter le niveau (118) et pousser ainsi le mélange granulats/solution nutritive au travers des tuyères (4). Un exemple non limitatif d'arrivée d'air comprimé est représenté en (112): le niveau du mélange dans l'espace (113) baisse sous la poussée de l'air comprimé jusqu'à son niveau minimum en (114) et l'on conçoit que le volume du mélange contenu initialement en (113) n'a d'autre issue que de passer par les tuyères (4) puisque le réservoir a au préalable été clos et rendu étanche en obturant la zone de retour des granulats au réservoir principale en (115).

Cette obturation peut être obtenue par de nombreux moyens connus mais pourra être utilement réalisée à l'aide d'un boudin gonflable (quand ce boudin est dégonflé et donc relevé les granulats contenus dans les trémies (12) peuvent sans difficulté retourner au réservoir (110) par simple gravité). De l'eau, de la solution nutritive, de l'air comprimé ou un mélange quelconque des trois, peuvent être introduits, préférentiellement en partie basse et en de nombreux points, dans le réservoir (110), dans le double but d'homogénéiser le mélange granulats/ solution nutritive qui y est contenu, et d'en faire monter le niveau (118), forçant ainsi ce mélange homogène dans les tuyères (4). Dans ce cas le système d'agitation prévu ci-avant peut être moins puissant ou même, dans certains cas, supprimé. L'air comprimé traversant les tuyères (4) peut en outre contribuer à l'aération des racines.

On conçoit que dans cette disposition l'agitation du mélange permet d'obtenir un milieu homogène dans lequel peuvent se répartir de façon uniforme les pressions et ce en tous points de la sous face de la dalle (3), et qu'une quantité égale de granulats traversera, dans un même temps, chaque centimètre carré de surface de section de tuyère.

Cette quantité de granualts injectée au droit de chaque tuyère (4) dans le bac (5) pourra être modulée à volonté en faisant varier à loisir de nombreux paramètres tels: section des tuyères, pourcentages relatifs de granulats et de solution nutritive, granulométrie, fréquence des mises sous pression, modulation des durées et des intensités d'application de cette pression etc.

On ne sortirait pas du champ de l'invention en remplaçant la pression d'air comprimé par un pompage sous pression légère, en remplaçant l'espace à parois rigides (113) par un espace à volume variable (tel un réservoir souple), par une déformation des parois du réservoir (110) etc.

L'espace (113) peut aussi bien être remplacé par un espace (113bis) central au lieu d'être périphérique et le niveau (114) par le niveau (114bis).

Des liaisons (116) par poteaux ou tirants peuvent être prévues de place en place pour relier la dalle (3) au fond du réservoir (117), elles sont de section réduite pour ne pas perturber l'homogénéisation du mélange granulats/solution nutritive pendant les phases d'agitation.

Pour l'aération des racines des plants, surtout en cas d'emploi de granulats à granulométrie fine laissant peu de vides intersticiels, il pourra être avantageux de maintenir le niveau (118) de la solution nutritive un peu plus bas que la sous face de la dalle (3) créant ainsi un espace (119) dans lequel on pourra insuffler de l'air qui, passant par les tuyères (4), viendra aérer le substrat en granulats (100) sur lequel croissent les plants (14).

Après leur passage dans les tuyères (4), les granulats (100) suivent le même cycle que celui décrit au chapitre A ci-avant: translation lente (avec extension concommitante longitudinale et transversale) depuis la zone de semis (6) jusqu'au front de récolte (7), de là ils tombent dans les trémies (12) après avoir traversé les tamis (13).

Le seuil relevé prévu dans la figure 1 en surépaisseur et à la périphérie de la dalle (3), au droit du front de récolte (7) peut être supprimé car il n'est pas nécessaire de maintenir le niveau de la solution nutritive à son niveau maximum en permanence, au contraire ce niveau ne sera atteint, dans la plupart des cas, que pendant le peu de temps où la pression est maintenue dans le réservoir (110) et où le niveau (118) s'élève. Le point haut des tamis (13) pourra de ce fait être abaissé et être prévu sensiblement au niveau du dessus de la dalle (3), celle-ci étant donc plane sur toute sa surface.

Quand l'installation est au repos, une libre communication peut exister entre le fond des trémies (12) et le réservoir (110), l'obturation (115) étant en position «ouverte». Dès le début de la mise en fonctionnement des agitateurs (111) les courants créés dans la solution nutritive contenue dans le réservoir (110) y font descendre les granulats précédemment contenus dans les trémies (12), même si la pente est très faible. Dès que les trémies (12) sont ainsi vidées, les obturateurs (115) peuvent être fermés, le réservoir (110) est alors étanche en tous points sauf au droit des tuyères (4).

Le même système de tuteurs, poussés à la base par les granulats, peut être utilisé. Chaque fois que nécessaire, ils peuvent également être poussés à leur sommet manuellement ou par tout dispositif mécanique.

L'objet de la présente invention est également de réaliser, dans une variante importante, un empilement de bacs de culture les uns sur les autres, en un nombre non limité de niveaux, aussi bien pour le mode de culture sur granulats que sur fils. L'éclairage des plants pourra dans ce cas être tout ou partie artificiel (lampes électriques, tubes fluorescents etc.) ou naturel, en renvoyant entre les bacs la lumière solaire captée à l'extérieur grâce à des surfaces réfléchissantes, ou toute combinaison de ces deux modes d'éclairage. Il est ainsi possible de constituer de véritables «tours» à plusieurs étages ou plusieurs dizaines d'étages, chacune de ces constructions, de très faible emprise au sol, pouvant être l'équivalent de plusieurs dizaines d'hectares de cultures classiques. Ces tours pourront, autant que de besoin, être prévues orientables, afin d'obtenir un éclairement et une température optimisée.

Il est évident que, dans ces conditions, toutes les déperditions, aqueuses, calorifiques, gazeuses, etc. seront encore plus considérablement réduites et la rentabilité encore améliorée.

L'objet de la présente invention est également de permettre une récupération facile et gratuite de calories habituellement perdues.

Pour ce faire, pendant les heures des jours chauds et ensoleillés où il est nécessaire de ventiler pour rafraîchir l'atmosphère et les plants, l'air ambiant aspiré puis refoulé dans les bacs de culture dans le but d'aérer les racines des plants (14) se trouve surchauffé par le rayonnement solaire, il et automatiquement refroidi par son passage au travers de la solution nutritive dans les réservoirs (110) ou les bacs (80) et/ou au travers du substrat en granulats (100), milieux auxquels il cède ses calories excédentaires, il retourne ensuite à l'atmosphère à une température nettement inférieure et convenant beaucoup mieux aux plants.

Les calories ainsi accumulées dans les réservoirs (110), les bacs (80), et/ou les substrats (100) sont automatiquement restituées pendant les heures fraîches où la température de l'air ambiant est inférieure à celle de la solution nutritive et/ou des granulats.

Le volume important de la solution nutritive, des granulats, ainsi que celui des réservoirs et bacs les contenant représente une masse importante à très grande inertie thermique absorbant et réémettant tour à tour des calories autrement perdues et constitue de ce fait un régulateur de températures idéal et gratuit.

L'objet de la présente invention est également de prévoir la possibilité de remplacer les lames (90), servant à pousser et/ou tirer les plants sur les fils au-dessus des bacs (80), par des pointes ou tiges de faible section, surtout dans les zones où il y a très peu de distance entre les rangées successives de plants.

En effet, dans certains de ces cas il pourrait arriver que les lames pleines et continues aient des difficultés à s'insérer entre les racines des plants de deux rangées consécutives en raison de la faible distance les séparant et de l'enchevêtrement des racines, et de ce fait auraient tendance, lors de leur mouvement ascendant, à soulever les plants (14) eux-mêmes, ce qu'il y a lieu d'éviter.

Pour parvenir à ce résultat les lames (90) équipant les chariots (92) sont remplacées par des tiges de faible section positionnées au milieu de chaque espace (82) régnant entre les deux fils (81) de chaque paire de fils, et de même hauteur que les lames (90). Ces tiges constituent une sorte de peigne à dents verticales et, du fait de leur faible section, n'ont aucune peine à trouver leur chemin au milieu des racines, et sans les blesser, au cours de leur mouvement ascendant.

Une fois en position haute elles poussent ou tirent les plants exactement comme l'auraient fait les lames (90).

L'objet de la présente invention est également d'accroître sensiblement la quantité d'énergie lumineuse effectivement reçue et utilisée par chaque plant, et donc son activité de photosynthèse en complétant, pendant un nombre d'heures réglable à volonté, l'éclairage naturel par un éclairage artificiel, ce qui est en soi une technique connue.

Toutefois, de la totalité de l'énergie lumineuse émise par une source quelconque, seule est utile pour la photosynthèse la fraction de cette énergie qui est réellement absorbée par la plante, le reste est réfléchi par le sol ou le feuillage et est perdu d'où un gaspillage d'énergie lumineuse considérable.

Dans la présente invention on limite considérablement cette perte d'énergie en obligeant les rayons lumineux à se réfléchir plusieurs fois entre la surface des plants et un réflecteur disposé au-dessus et éventuellement autour des bacs de culture. Ceci sera réalisé d'une façon particulièrement simple et économique dans le cas de bacs empilés les uns sur les autres, il suffira de rendre réfléchissante la sous face de chaque bac, et donc la sous face de leurs fonds (1, 1bis), (117), (80), une simple peinture blanche brillante étant suffisante dans la plupart des cas, mais on pourra, dans des installations très performantes, et en particulier dans l'espace, utiliser des surfaces réfléchissantes plus parfaites, telles des miroirs, du métal poli ou tout autre système équivalent; les parois (30) et/ou (32) des bacs pourront être traitées de la même façon.

L'énergie lumineuse émise sera ainsi utilisée avec un rendement très proche de l'unité et donc sans perte, ce qui contribuera par la même occasion à réduire d'autant les dépenses de chauffage.

Dans le cas de bacs disposés sur un seul niveau les parois (29), (30) et/ou (32) pourront être semi transparentes pour laisser entrer la lumière solaire mais la «piéger» en renvoyant les rayons réfléchis par la surface des plants vers ceux-ci.

Une variante à ce dispositif consiste à prévoir des rideaux réfléchissants enroulables, distincts ou non des parois (29), (30), (32), couvrant toute la surface utile des bacs (5), (80), et pouvant également être disposés sous la paroi transparente (29) ou dans l'espace (33).

Ces rideaux peuvent être enroulés sur des axes, à la périphérie ou sur le grand côté des bacs trapézoïdaux, pendant les heures où l'ensoleillement naturel est suffisant, et déroulés, en les tirant vers le centre ou le petit côté des bacs (5), (80), quand cet ensoleillement naturel est insuffisant, l'éclairage artificiel étant alors mis en service.

Ces mêmes rideaux peuvent également être utilisés pour l'ombrage des plants, ils ont leur face dirigée vers les bacs réfléchissante, ils peuvent être opaques ou semi transparents.

Il est ainsi possible d'accroître sensiblement et à peu de frais l'énergie lumineuse effectivement reçue et utilisée par les plants et donc de leur permettre une activité de photosynthèse suffisante malgré que leurs parties aériennes ne disposent que d'une surface très réduite. Par la même occasion les dépenses de chauffage si trouvent réduites. Les plants peuvent ainsi croître normalement malgré la modicité de la surface dont ils disposent.

L'objet de la présente invention est également d'apporter des moyens permettant de maintenir les bacs de culture (80) en bon état de propreté malgré que leur fond soit peu accessible puisqu'ils sont recouverts en permanence d'une couche de plants à tous les stades de croissance.

Pour parvenir à ce résultat, dans le procédé de culture sur fils, les chariots (92) peuvent être munis d'un système d'aspiration es fragments de plans ou détritus pouvant tomber au fond des bacs afin d'éviter qu'ils n'y pourrissent et afin de maintenir les bacs en parfait état de propreté.

Cette aspiration peut être réalisée à l'aide d'une pompe aspirante (à la manière d'un aspirateur ménager ou de piscine). Le mélange aspiré (solution nutritive/détritus) est filtré. La solution filtrée et propre est renvoyée au bac de culture (80) et les détritus stockés dans un réservoir approprié qui est vidé à intervalles réguliers.

On comprend que les chariots circulant sur toute la surface des bacs (80) peuvent, grâce aux aspirateurs décrits ci-dessus, en nettoyer la totalité du fond, à intervalles de temps rapprochés.

De même il est possible d'arraser régulièrement les racines des plants (afin qu'elles ne deviennent pas trop encombrantes) à une longueur sous fils compatible avec une bonne croissance des plants, d'aspirer les déchets et de les évacuer comme il vient d'être dit.

Cet arrasement peut se faire autoamtiquement par tout système genre tondeuse à gazon ou faucheuse, mais fonctionnant à l'envers, c'est-à-dire sous les racines au lieu de au-dessus des parties aériennes, ces systèmes étant bien entendu fixés eux aussi aux chariots (92).

L'objet de la présente invention est également susceptible d'applications spatiales, et tout particulièrement le procédé de culture sur fils, ceci en raison des gains considérables de productivité à l'unité de surface, de volume et de poids, ceci aussi bien pour des installations satellisées que construites sur des corps célestes autres que la terre. Les questions de poids étant primordiales, les bacs de culture (5), (80) pourront être réalisés en matières légères tel l'aluminium, le plastique etc. Les racines des plants (14) pourront ne pas plonger en permanence dans la solution nutritive dont le poids pourrait dans ce cas être prohibitif, les racines étant simplement vaporisées ou imprégnées, à intervalles réguliers, par un brouillard de solution nutritive, avec récupération et recyclage permanent.

Dans l'espace proprement dit les bacs de culture, isolés ou groupés en ensembles plus ou moins importants, pourront être mis en rotation afin de créer une faible gravité pouvant être favorable à la bonne croissance des plants.

Dans le cas de culture sur des corps célestes naturels, les bacs (5), pourront recevoir des granulats le plus souvent d'origine locale.

Les bacs (5), (80), seront avantageusement empilés les uns sur les autres afin d'obtenir des ensembles extrêmement compacts dont la climatisation sera particulièrement aisée. Les êtres vivants occupant ces stations pourront vivre en symbiose avec ces cultures avec échange réciproque d'oxygène, de gaz carbonique et de vapeur d'eau.

Toutes les descriptions qui précèdent ne sont données qu'à titre indicatif et d'exemple, elles ne limitent nullement le domaine de l'invention dont on ne sortirait pas en remplaçant les détails décrits par tous autres équivalents.

Le Procédé de Culture Automatisée Sur Supports Extensibles Mobiles, que ce soit sur supports granulats, dans l'eau, ou sur supports mixtes, a des applications industrielles absolument universelles, car il permet enfin une réelle industrialisation de la culture des végétaux.

Il trouve son application dans tous les pays et sous tous les climats, il pourra également être avantageusement utilisé dans de multiples applications spatiales.

Il concerne toutes les professions agro-alimentaires et similaires, les agriculteurs en général et tout particulièrement les maraîchers, les producteurs de cresson, les horticulteurs etc.

Il intéresse également les producteurs d'engrais et l'industrie chimique en général pour la fourniture des solutions nutritives, ainsi que les entreprises de génie civil pour la construction des installations et les fabricants de matériel pour la fourniture des équipements.

**Revendications**

1. Procédé de culture automatisée d'un ensemble de plantes en milieu aqueux permettant d'occuper la surface minimum correspondant aux besoins en espace de ces plantes au fur et à mesure de leur croissance, dans lequel les plantes sont semées et/ou plantées sur un support disposé dans un bac collectif contenant une solution nutritive et sont déplacés sur ce support et dans le bac par des moyens d'entraînement, distincts de la solution nutritive, de manière à espacer les plants sur toutes leurs faces, caractérisé

en ce que le bac collectif (5, 80) étant de forme quelconque, les plantes (14) sont semées et/ou plantées directement sur le support lui même, lequel support étant constitué:

a) soit de granulats (100) disposés dans ledit bac et imprégnés de ladite solution nutritive (84), étant ou ayant été introduits dans cette solution nutritive,

b) soit de fils (81) rayonnants et divergents, disposés par paires, de façon à supporter les graines ou maintenir les plantes entre les deux fils, ces fils étant fortement tendus d'une zone de semis (6) jusqu'à une zone de récolte (7) au dessus du fond du bac et formant un réseau qui recouvre le bac, les racines des plantes étant en contact avec la solution nutritive,

c) soit d'une combinaison des deux, les moyens de support et de guidage des plantes (14) étant constitués principalement par les granulats (100) et accessoirement par les fils (81),

d) soit principalement d'une couche flottante de granulats légers (100) de densité inférieure à celle de la solution nutritive (84) servant au moins partiellement de support et de moyens de guidage pour les plantes (14), et accessoirement de fils pouvant servir de moyens complémentaires de guidage et de support des plantes,

et en ce que l'espacement progressif des plantes entre elles et sur toutes leurs faces est effectué:

e) dans le cas du support constitué uniquement de granulats (100) par un système d'injection de granulats (100) dans la masse de granulats (100) à partir de multiples points (4) situés dans le bac (5), cette injection étant dirigée principalement vers un front de récolte (7) des plantes de manière à déplacer les granulats et les plantes vers ce front (7), avec des inclinaisons latérales appropriées des points d'injection (4) destinées à assurer en même temps l'écartement progressif des plantes dans le sens transversal à ce sens de translation principal, les granulats et les plantes étant entraînés sur le front de récolte en dehors du bac, séparés par un système à tamis, et les granulats étant recyclés,

f) dans le cas des fils (81), par la divergence des fils pour ce qui est de l'espacement dans le sens transversal par rapport à la direction de ces fils, et par des moyens d'entraînement mécaniques agissant sur les plantes dans le sens longitudinal des fils, ces moyens mécaniques assurant la translation des plantes de la zone de semis (6) à la zone de récolte (7) ainsi que leur espacement progressif dans cette direction,

g) dans le cas de la combinaison des deux, par l'utilisation des moyens e) ou f) ou par une combinaison des moyens e) et f),

h) dans le cas du support constitué d'une couche flottante de granulats légers (100) par l'utilisation de moyens mécaniques, analogues à ceux de f), agissant radialement selon des directions divergentes.

2. Procédé selon revendication 1, caractérisé en ce qu'il comporte des moyens pour forcer les granulats (100) depuis un silo (8) jusqu'à l'espace (2) existant entre les deux parties (1, 1bis et 3) du double fond des bacs de culture (5), puis au travers des tuyères (4), afin de remplir les bacs de granulats, et ensuite les déplacer vers les zones de récolte (7) en déplaçant en même temps les plantes (14), puis pour pousser ces granulats en dehors des bacs et les renvoyer par gravité dans le silo (8) en passant au travers des tamis (13), qui retiennent les plantes, puis dans les trémies (12) et par les conduits (15), le passage dans ces conduits (15) peut être facilité par l'action de vibrateurs (16), ou encore le retour au silo des granulats peut se faire sous l'action de l'air comprimé, les granulats (100) étant alors refoulés horizontalement dans les conduits (15bis) jusqu'au silo (8), les plantes (14), entrainées par les granulats arrivent, prêtes à être récoltées, en (7) où elles sont cueillies soit manuellement, soit par des systèmes récolteurs (19).

3. Procédé selon revendication 2, caractérisé en ce que une méthode perfectionnée d'alimentation des bacs (5) en granulats (100) est constituée par l'utilisation d'un réseau de conduits (73, 74, 75) avec interposition de volumes tampons (72, 72bis).

4. Procédé selon revendication 2, caractérisé en ce que les fonds (1, 1bis, 3) des bacs (5), peuvent être réalisés en pente descendante depuis les zones de semis ou plantation (6) jusqu'au front de récolte (7).

5. Procédé selon revendication 1, caractérisé en ce qu'un autre moyen d'entraînement des granulats (100) est le suivant: un réservoir (110) est disposé sous le bac de culture (5), il contient un mélange de solution nutritive (84) et de granulats (100) qui sont mis en suspension homogène par des moyens assurant leur agitation, après quoi l'élévation du niveau (118) de ce mélange homogène est suffisante pour forcer le mélange au travers des tuyères (4) jusque dans le bac de culture (5).

6. Procédé selon revendication 1, caractérisé en ce que l'on utilise des tuyères (4) dont les axes sont inclinés vers le front de récolte (7) et sont divergents.

7. Procédé selon revendication 1, caractérisé en ce que l'un des moyens de déplacement des plantes (14), est constitué par un ou plusieurs chariots (90 à 97), les lames (90) de ces chariots peuvent être découpées en forme de peigne et/ou remplacées par des pointes fines.

8. Procédé selon revendication 1 avec couche flottante de granulats légers, caractérisé en ce que les plantes (14) sont déplacées par un système de chariots (90 à 97), ou par tout autre système aboutissant au même résultat, agissant directement sur la partie inférieure des plantes (14) et/ou de la couche de granulats légers (100), celle-ci entraînant les végétaux qui la recouvrent, les fils peuvent être supprimés quand la force portante de la couche de granulats est suffisante pour supporter seule le poids des plantes, les granulats peuvent être recyclés.

9. Procédé selon revendication 1, caractérisé en ce que l'on utilise un portique (23, 23bis) se déplaçant au dessus des bacs de culture (5, 80) et des plantes (14).

10. Procédé selon revendication 1, caractérisé en ce qu'il comporte des tuteurs (40), munis ou non de plaques de poussées (41), pour supporter les plantes grimpantes (14), ces tuteurs sont implantés, à leur partie inférieure, dans les granulats (100), et/ou glissent entre les fils (81).

11. Procédé selon revendication 1, caractérisé en ce que les moyens mécaniques de déplacement des plantes (14) et/ou des granulats (100) peuvent être munis de systèmes coupe racines, de systèmes de nettoyage des fonds des bacs et de systèmes d'aspiration des déchets.

12. Procédé selon revendication 1, caractérisé en ce que seule la surface effectivement cultivée, c'est-à-dire la seule surface des bacs (5, 80), est abritée par la disposition d'ensemble des parois (29, 30, 31) délimitant un volume minimal qui peut être le seul à être climatisé, ombragé et où l'atmosphère peut être contrôlée et modifiée, les espaces (33, 22) entre parois intérieures (29, 30, 31) et parois de doublage (32, 32bis) constituent, en association avec celles-ci, une isolation thermique.

13. Procédé selon revendication 1, caractérisé en ce que ces volumes (33) peuvent recevoir des fumées ou des gaz plus ou moins transparents.

14. Procédé selon revendication 1, caractérisé en ce que l'air prélevé dans l'espace compris entre les bacs (5, 80) et les parois de l'abri est envoyé dans et au travers la solution nutritive (84) et/ou les granulats (100) pour les aérer et faire un échange thermique.

15. Procédé selon revendication 1, caractérisé en ce que l'arrêt des rayons lumineux est obtenu par l'utilisation d'un liquide opaque flottant sur la solution nutritive (84).

16. Procédé selon revendication 1, caractérisé en ce que les bacs de culture (5, 80) peuvent être disposés les uns au dessus des autres en forme de «tours de Culture».

17. Procédé selon revendication 1, caractérisé en ce que les bacs de culture (5, 80) isolés ou les tours de culture peuvent être mis en rotation.

18. Procédé selon revendication 1, caractérisé en ce que des systèmes réfléchissant la lumière peuvent être disposés au dessus, autour et entre les bacs de culture (5, 80).

19. Procédé selon revendication 1, caractérisé en ce que ce procédé peut être mis en œuvre dans l'espace et/ou sur des corps célestes.

20. Appareillage pour mettre en œuvre le procédé selon une ou plusieurs des revendications précédentes, comprenant un bac collectif (5, 80) contenant une solution nutritive, un support pour les plantes disposé dans ce bac et des moyens d'entraînement distincts de la solution nutritive et déplaçant les plantes sur ou avec le support de manière à espacer les plantes sur toutes leurs faces, caractérisé en ce que:

— le bac collectif est de forme quelconque,

— le support est constitué selon l'un des moyens a) à d) cités dans la revendication 1, et

— les moyens d'entraînement selon l'un des moyens e) à h) de la même revendication 1.

21. Appareillage selon revendication 20, caractérisé en ce que un silo (8) est rempli au moins partiellement de granulats (100), il est muni d'une arrivée d'air comprimé (9), de clapets antirefoulement (17) et d'une tubulure (11) débouchant dans l'espace (2, 2bis) séparant les deux parties (1, 1bis–3) formant double fond du bac de culture collectif (5), la partie supérieure (3) de ce double fond est percée d'un grand nombre de trous ou tuyères (4), à l'extrémité du bac sont placés des tamis (13) et des trémies (12, 12bis), des conduits (15, 15bis) relient le fond des trémies (12, 12bis) au silo (8), des systèmes récolteurs (19) peuvent être utilisés, les silos (8) pouvant être incorporés aux bacs de culture ou en être éloignés.

22. Appareillage selon revendication 20, caractérisé en ce qu'un réservoir (110) comportant un fond (117) et dont la couverture (3) est percée de tuyères (4) est au moins partiellement rempli d'un mélange de granulats (100) et de solution nutritive (84), il contient des moyens d'agitation tels une ou des hélices (111), il comporte une ou des arrivées d'air comprimé (112), une ou des zones de mise en pression (113, 113bis), un ou des obturateurs (115), et des poteaux ou tirants (116).

23. Appareillage selon revendication 20, caractérisé en ce qu'il est constitué par un réseau de fils (81) fortement tendus, rayonnants et divergents, pouvant être soutenus de place en place par des supports (85).

24. Appareillage selon revendication 20, caractérisé en ce qu'un chariot (90 à 97) déplaçable sur des rails ou guides (91) comporte des roues ou des galets fixés à son chassis (92), ce chassis comporte un support guide (94) sur lequel coulissent des lames (90) munies d'ergots (96) pénétrant dans le filetage d'une ou plusieurs vis sans fin à pas progressif (93) mûes par un ou des moteurs (95), la première et/ou la dernière lame (90) peut comporter des prolongements minces (97), l'ensemble (90, 93, 94, 95, 96, 97) peut être animé d'un mouvement ascendant ou descendant.

25. Appareillage selon revendication 20 caractérisé en ce que un autre moyen de déplacement des plantes est constitué par des rouleaux cannelés ou munis de doigts.

26. Appareillage selon revendication 20, caractérisé en ce qu'un portique mobile (23, 23bis) comporte une articulation autour d'un mât (24) et/ou au moins un galet (26) roulant sur un ou plusieurs rails/ guides (25), une nacelle (27) mobile horizontalement et verticalement est suspendue par l'intermédiaire de galets (28) au portique (23, 23bis).

**Patentansprüche**

1. Automatisches Anpflanzverfahren für Pflanzen in wäßriger Umgebung, welches eine optimale Nutzung der zur Verfügung stehenden Oberfläche erlaubt, indem der von den Pflanzen im Verlauf ihres Wachstums benötigte Raum jeweils auf ein Mindestmaß reduziert wird. Die Saat und/oder die Setzlinge werden auf einen Nährboden gesät und/oder gepflanzt, der in einem mit Nährlösung gefüllten Anpflanzbehälter für Gemeinschaftskulturen untergebracht ist und können auf diesem Nährboden mit Hilfe eines, von der Nährlösung unabhängigen, Transportsystems nach allen Seiten auseinander geschoben werden, charakterisiert dadurch daß:

die Form des Gemeinschaftsbehälters (5, 80) unerheblich ist, die Pflanzen (14) direkt auf den Nährboden gesät und/oder gepflanzt werden. Dieser kann bestehen aus:

a) einem im Anpflanzbehälter befindlichen und mit Nährlösung (84) getränkten Granulat (100), welches in dieselbe eingebracht war oder ist,

b) Fäden (81), die paarweise strahlenförmig auseinander streben, wobei das Saatgut oder die Setzlinge jeweils zwischen zwei Fäden gehalten werden, welche unter starker Spannung vom Saatbereich (6) ausgehend zum Erntebereich (7) oberhalb des Behälterbodens hinführen und auf diese Weise ein den Behälter bedeckendes Netz bilden. Die Wurzeln sind dabei in Kontakt mit der Nährlösung;

c) einer Kombination beider Systeme, wobei die Pflanzen (14) in erster Linie von den Granulaten (100) und zusätzlich von Fäden (81) gehalten und geführt werden;

d) einer schwimmende Schicht leichter Granulate (100), deren Dichte geringer ist als die der Nährlösung (84), die hautpsächlich als Träger und Führung der Pflanzen (14) dienen und zusätzlich durch Fäden auf komplementärer Weise unterstützt werden,

Die progressive Vergrößerung der Abstände zwischen den Pflanzen nach allen Richtungen kann durch verschiedene Systeme erreicht werden:

e) Im Falle eines Nährbodens bestehend ausschließlich aus Granulat (100), durch ein von verschiedenen Punkten (4) im Anpflanzbehälter ausgehendes Einspritzsystem, welches Granulat (100) in die bereits vorhandene Granulatmasse (100) einspritzt. Die Einspritzung ist hauptsächlich in Richtung Erntebereich (7) orientiert, so daß Pflanzen und Granulat in diesen Bereich (7) geschoben werden, einer den Einspritzpunkten (4) entsprechenden seitlichen Neigung folgend, die gleichzeitig die progressiven Abstände der Pflanzen in Querrichtung zur Hauptbewegung bestimmt, wobei das Granulat und die Pflanzen an den Rand des Erntebereichs aus dem Behälter herausgeschoben werden, wo sie durch ein Siebsystem voneinander getrennt werden, so daß das Granulat wiedergewonnen wird;

f) Im Falle der Fäden (81), durch das Auseinanderlaufen derselben, in Querrichtung und durch eine auf die Pflanzen in Längsrichtung wirkendes mechanisches Fortbewegungsmittel, welches die Pflanzen vom Saatbereich (6) zum Erntebereich (7) verschiebt und die progressive Vergrößerung der Abstände in dieser Richtung bestimmt;

g) Im Falle einer Kombination der beiden Verfahren unter Anwendung der Systeme e) oder f), oder durch eine Kombination beider Systeme e) und f);

h) Im Falle eines Nährbodens bestehend aus einer schwimmenden Schicht leichten Granulats (100), durch Verwendung eines mechanischen Fortbewegungsmittels, ähnlich wie in f) beschrieben, das kreisförmig in auseinanderstrebende Richtungen wirkt.

2. Verfahren laut Anspruch 1, zeichnet sich durch ein System aus, welches das Granulat (100) von einem Silo (8) aus in den Zwischenraum (2) des doppelten Bodens (1, 1bis und 3) des Anpflanzbehälters (5) drückt, von wo aus das Granulat durch Düsen (4) in den Behälter selbst gelangt, um schließlich in den Erntebereich (7) bewegt zu werden, wobei das Granulat die Pflanzen (14) mit sich zieht. Im Erntebereich wird das Granulat aus dem Behälter befördert und fällt durch seine eigene Schwerkraft über Siebe (13), die die Pflanzen zurückhalten, in die Trichter (12), um über verschiedene Leitungen (15) ins Silo (8) zurück zu gelangen. Der Durchlauf des Granulats in den Leitungen (15) kann mit Hilfe von Vibratoren (16) oder durch Einsatz von Druckluft, die das Granulat in den Leitungen (15bis) in horizontaler Richtung ins Silo (8) schiebt, erleichtert werden. Die Pflanzen (14), die vom Granulat mitgezogen werden, kommen erntereif an (7) und können entweder manuell oder durch eine Ernteanlage (19) geerntet werden.

3. Verfahren laut Anspruch 2, zeichnet sich durch die Anwendung einer perfektionierten Methode aus, bei der die Versorgung der Behälter (5) mit Granulat (100) durch Verwendung eines Leitungsnetzes (73, 74, 75) und zwischengeschalteten Pufferzonen (72, 72bis) erreicht wird.

4. Verfahren laut Anspruch 2, zeichnet sich dadurch aus, daß die Böden (1, 1bis, 3) der Behälter (5) vom Saat- oder Pflanzbereich (6) aus in Richtung des Erntebereiches (7) geneigt sein können.

5. Verfahren laut Anspruch 1, zeichnet sich durch ein anderes Fortbewegungsmittel des Granulats (100) aus:

Ein unter dem Anpflanzbehälter (5) befindliches Reservoir (110) ist mit einer Mischung aus Nährlösung (84) und Granulat (100) gefüllt. Die aus Granulat und Nährlösung bestehende homogene Suspension ermöglicht die Beweglichkeit des Granulats, so daß eine Anhebung (118) der Füllmenge dieser homogenen Mischung ausreicht, um diese durch Düsen (4) bis in den Anpflanzbehälter (5) zu drücken.

6. Verfahren laut Anspruch 1, zeichnet sich durch die Verwendung von Düsen (4) aus, deren Axen in Richtung Erntebereich (7) geneigt sind und auseinanderstreben.

7. Verfahren laut Anspruch 1, zeichnet sich durch die Verwendung eines oder mehrerer Wagen (90 bis 97) zur Fortbewegung der Pflanzen (14) aus. Die Lamellen (90) dieser Wagen können entweder die Form eines Kammes haben und/oder durch feine Spitzen ersetzt werden.

8. Verfahren laut Anspruch 1, bestehend aus einer schwimmenden Schicht leichten Granulats, zeichnet sich dadurch aus, daß die Pflanzen (14) durch ein direkt auf ihren unteren Teil (14) und/oder die Schicht leichten Granulats (100) wirkendes Wagensystem (90–97) (oder jedes andere zum gleichen Ergebnis führende System) fortbewegt werden, wobei die leichte Granulatschicht die sie bedeckenden Pflanzen mit sich zieht. Bei ausreichender Tragkraft der Granulatschicht kann auf die Verwendung der Fäden verzichtet werden. Das Granulat kann wiederverwendet werden.

9. Verfahren laut Anspruch 1, zeichnet sich durch die Verwendung eines Gerüstes (23, 23bis) aus, das sich über dem Anpflanzbehälter (5, 80) und den Pflanzen (14) bewegt.

10. Verfahren laut Anspruch 1, bestehend aus Stützen (40), die eventuell mit Schubplatten ausgestattet sind, zum Stützen der Kletterpflanzen (14). Die Stützen sind an ihrem unteren Teil im Granulat (100) befestigt und/oder gleiten zwischen den Fäden (81).

11. Verfahren laut Anspruch 1, zeichnet sich durch ein mechanisches Transportmittel aus, welches die Pflanzen (14) und/oder das Granulat (100) fortbewegt. Dieses Transportmittel kann mit einer Wurzelschneidevorrichtung, mit einer Säuberungsanlage zur Reinigung der Böden der Anpflanzbehälter sowie mit einem System zum Absaugen der Abfälle ausgestattet sein.

12. Verfahren laut Anspruch 1, zeichnet sich dadurch aus, daß nur die tatsächlich bepflanzte Oberfläche, d.h. die Oberfläche der Behälter (5, 80) durch das Anbringen von Seitenwänden (29, 30, 31) geschützt wird, welche ein klimatisiertes und beschattetes Mindestvolumen begrenzen, dessen Atmosphäre kontrolliert und verändert werden kann. Die Räume (33, 22) zwischen den inneren Trennwänden (29, 30, 31) und den Doppelseitenwänden (32, 32bis) bilden eine thermische Isolierung.

13. Verfahren laut Anspruch 1, zeichnet sich dadurch aus, daß die Volumina (33) mehr oder weniger transparenten Rauch oder Gase aufnehmen können.

14. Verfahren laut Anspruch 1, zeichnet sich dadurch aus, daß die Luft aus den Räumen zwischen den Anpflanzbehältern und den Schutzwänden in und durch die Nährlösung (84) und/oder das Granulat (100) geschickt werden kann, was eine Belüftung und einen thermischen Austausch ermöglicht.

15. Verfahren laut Anspruch 1, zeichnet sich durch die Verwendung einer undurchsichtigen, auf der Nährlösung (84) schwimmenden Flüssigkeit aus, welche die einfallenden Lichtstrahlen aufhält.

16. Verfahren laut Anspruch 1, zeichnet sich dadurch aus, daß die Anpflanzbehälter (5, 80) zu einer Art «Turm» übereinander gestapelt werden können.

17. Verfahren laut Anspruch 1, zeichnet sich dadurch aus, daß die einzelnen Anpflanzbehälter (5, 80) oder die «Türme» rotieren können.

18. Verfahren laut Anspruch 1, zeichnet sich durch die Verwendung von Lichtreflektoren aus, die über, zwischen oder rund um die Anpflanzbehälter (5, 80) angebracht werden können.

19. Verfahren laut Anspruch 1, zeichnet sich dadurch aus, daß dieses Verfahren auch im Raum und/oder auf Himmelskörpern angewendet werden kann.

20. Anlage, die die Anwendung des Verfahrens gemäß einem oder mehrerer der vorhergehenden Ansprüche erlaubt. Das Verfahren beinhaltet einen Gemeinschaftsbehälter (5, 80) mit Nährlösung, Nährboden und ein von der Nährlösung unabhängiges Transportmittel, welches die Setzlinge auf oder mit dem Nährboden bewegt, so daß die Pflanzen nach allen Seiten auseinander geschoben werden, charakterisiert durch

– einen Gemeinschaftsbehälter, dessen Form unwichtig ist,

– einen Nährböden gemäß a) bis d), wie laut Anspruch 1 beschrieben,

– ein Transportmittel gemäß e) bis h), wie laut Anspruch 1 beschrieben.

21. Anlage laut Anspruch 20, besteht aus einem mindestens teilweise mit Granulat (100) gefüllten Silo (8), welches mit einer Duckluftzufuhr (9), Klappenventilen (17) (die das Zurücklaufen des Granulats verhindern sollen) und einem Ansaugstutzen (11) versehen ist, wobei der Ansaugstutzen in den Zwischenraum (2, 2bis) des doppelten Bodens (1, 1bis–3) des Gemeinschaftsbehälters (5) mündet. Im oberen Teil (3) des doppelten Bodens befindet sich eine große Anzahl von Löchern oder Düsen (4), am Rand des Behälters befinden sich Siebe (13), Trichter (12, 12bis) und Leitröhren (15, 15bis), die den Boden der Trichter (12, 12bis) mit dem Silo (8) verbinden. Erntesysteme (19) können verwendet werden, und die Silos (8) können entweder in die Anpflanzbehälter eingebaut oder separat installiert werden.

22. Anlage laut Anspruch 20, besteht aus einem Reservoir (110) mit Boden (117), welches mindestens teilweise mit einer Granulatmischung (100) und einer Nährlösung (84) gefüllt ist, dessen Abdeckung (3) mit mit Düsen (4) ausgestatteten Öffnungen versehen ist. Es gehören weiterhin eine Bewegungsanlage, d.h. ein oder zwei Ventilationsschrauben (111), eine oder mehrere Druckluftzufuhren (112), eine oder mehrere Druckzonen (113, 113bis), eine oder mehrere Verschlußvorrichtungen (115) und Masten oder Zugbänder (116) dazu.

23. Anlage laut Anspruch 20, zeichnet sich durch ein Netz (81), bestehend aus stark gespannten Fäden aus, die strahlenförmig auseinanderstreben und die in Abständen durch Träger (85) gehalten werden können.

24. Anlage laut Anspruch 20, zeichnet sich durch einen auf Schienen oder Führungen (91) beweglichen Wagen (90–97) aus, an dessen Fahrgestell (92) Räder oder Laufrollen angebracht sind. Dieses Fahrgestell besteht aus einer Führungsschiene (94), auf dem mit Nocken (96) versehene Lamellen (90) gleiten. Die Nocken dringen in die Gewinde einer oder mehrerer Schnecken (93) ein, die ihrerseits durch einen oder mehrere Motoren (95) angetrieben weden. Die erste oder letzte Lamelle (90) kann mit feinen spitzenförmigen Verlängerungen (97) ausgestattet sein, und das gesamte System (90, 93, 94, 95, 96, 97) kann in eine absteigende oder aufsteigende Bewegung versetzt werden.

25. Anlage laut Anspruch 20, zeichnet sich durch ein anderes Transportmittel aus, wobei die Rollen gerillt sind oder mit Kontaktfingern versehen sind.

26. Anlage laut Anspruch 20, bestehend aus einem mobilen Gerüst (23, 23bis), mit einem einen Mast (24) umgebenden Gelenk versehen, und/oder mindestens einer Laufrolle (26) auf einer oder mehreren Führungsschienen (25), wobei eine mobile Gondel (27) horizontal oder vertikal mit Hilfe von Rollen (28) am Gerüst (23, 23bis) aufgehängt wird.

**Claims**

1. Automated culture process of a set of plants in watery environment enabling the utilisation of the minimum area corresponding to the needs in space of the plants at is grows and the fact that the seeds or seedlings are sown and/or planted on substrates placed in collective containers impregnated with nutrient solution and rendered mobile on the said base and in the containers by a system distinct from the nutrient solution so as to space out the plants on all sides characterised so as to space out the plants on all sides characterised:

by the fact that the collective containers (5, 80) being of any shape the plants (14) are sown and/or planted directly on the substrates, the said substrates being composed as follows:

a) either of granulates (100) placed in the said containers and impregnated with the said nutrient solution (84), being or having been immersed in that nutrient solution;

b) or of one network of radiating divergent pairs of wires (81) which act as a foundation for the seeds or maintain the plants between the wires of each pair, the wires being drawn taut from the sowing area (6), or planting area, to the picking area (7) above the bottom of the container in a network covering the container, the roots of the plants being in contact with the nutrient solution;

c) or of a mixed foundation combining the granulates (100) and the wires (81) and the fact that the base and the means of guiding the plants (14) are mainly formed by the granulates (100) and accessorily by the networks of wires (81);

d) or mainly of a floating layer of light granulates (100) of a density inferior to that of the nutrient solution (84) acting at least partially as substrates and means of guiding for the plants (14) with accessorily networks of wires acting as complementary means of guiding and substrates for the plants and the fact that the progressive spacing out of the plants between one another and on all sides is carried out;

e) in the case of substrates exclusively composed of granulates (100) by a system of injection of granulates (100) into the bulk of granulates (100) from multiple nozzles (4) placed in the container (5) and the fact that the injection is mainly directed towards a picking area (7) so as to move the granulates and the plants on to the picking area (7) with appropriate lateral inclines of the nozzles (4), which at the same time renders possible the progressive spacing out of the plants crosswise the main translation movement, the granulates and the plants being carried along to the picking area, then separed through a sieve with the granulates which drop into bins returning to the silo;

f) in the case of networks of wires (81) by the divergence of the wires for the spacing out crosswise the direction of the wires and by mechanical means of carrying the plants lengtwise along the wires from the sowing area (6) to the picking area (7) and their progressive spacing out in that direction;

g) in the case of the combination of the two systems, using the means e) or f) or by the combination of the means e) and f);

h) in the case of substrates composed of a floating layer of light granulates (100), by the use of mechanical means similar to those of f) acting radially in diverging directions.

2. Process as in claim 1, characterised by the fact that the apparatus for driving the granulates (100) from the silo (8) to the space (2) between the bottom and the foundation (1,1bis, 3) of the containers (5) via nozzles (4) so as to fill the containers with granulates and then move them on to picking area (7) carring the plants (14) along with them, the granulates are then propelled out of the containers and by the mere force of gravity returned to the silo (8), passing through a sieve (13), the rol of which is to retain the plants, then into the bins (12); the descent into the pipes (15) may be facilitated by vibrators (16) or the returning to the silo of the granulates may be carried out by means of compressed air, the granulates (100) being forced back horizontally into the pipes (15bis) and the silo (8); the plants (14) carried along by the granulates arrive, ready for picking, at the picking areas (7) where they are picked either by hand or by automatic harvesting cylinders (19).

3. Process as in claim 2, characterised by the fact that an improved system for supplying the containers (5) with granulates (100) may be obtenaid by a network of pipes (73, 74, 75) with capacity plugs (72, 72bis) spaced along them.

4. Process as in claim 2, characterised by the fact that the bottoms (1,1bis, 3) of the containers (5) may slope downwards from the sowing or planting area (6) to the picking area (7).

5. Process as in claim 1, characterised by the fact that another system for carrying the granulates (100) along may also be constituted by the following method: one reservoir (110) is placed under the growing container (5) and contains a mixture of nutrient solution (84) and granulates (100) placed in a homogenous suspension by ensuring that they are shaken up, the raising of the level (118) of the homogenous nutrient solution/granulates mixture may thus be sufficient to push the mixture through the nozzles (4) of the containers (5).

6. Process as in claim 1, characterised by the use of nozzles (4) the axes of which are inclined toward the picking area (7) and are divergent.

7. Process as in claim 1, characterised by the fact that one of the means of carrying the plants (14) along is constituted by a system of one or more 'carriages' (90 to 97), the strips (90) of which may be chaped like combs and/or replaced by thin points.

8. Process as in claim 1, with a floating layer of light granulates (100), characterised by the fact that the plants (14) are moved along by a system of carriages (90 to 97) or by any other system leading to the same result, pulling or pushing directly the lower part of the plants (14) and/or moving the layer of light granulates (100) which may itself carry along the plants which are on top; the wires may simply be done away with when the granulates layer offer by itself sufficient support for the weight of the plants, the granulates may be driven back to the silo at the end of each cycle.

9. Process as in claim 1, characterised by the use of a metallic construction (23, 23bis) sweeping the whole surface of the containers (5, 80) and the plants.

10. Process as in claim 1, characterised by the use of stakes (40) with or without thrust plates (41) to support the raising plants (14) the lower part of the said stakes may be anchored in the granulates (100) and/or slide between the wires (81).

11. Process as in claim 1, characterised by the fact that the mechanical means of carrying along the plants (14) and/or the granulates (100) may be equipped with a root-cutting system for cleaning the bottoms of the containers and sucking out debris and rubbish.

12. Process as in claim 1, characterised by the fact that the only area in fact cultivated i.e. the entire surface of containers (5, 80) is protected by the way the walls (29, 30, 31) are set up defining a minimum volume to be climatised, shaded the air of which may be controlled and modified, the space (33, 22) between the interior walls (29, 30, 31) and the linings (32, 32bis) offer, in association with the latter a thermic insulation.

13. Process as in claim 1, characterised by the fact that more or less transparent quality of gaz or smoke may be injected into the volumes (33).

14. Process as in claim 1, characterised by the fact that the ambient air in the enclosed space between the containers (5, 80) and the walls may be sent into and through the nutrient solution (84) and/or granulates (100) to air them and thus provide a transfer of calories.

15. Process as in claim 1, characterised by the fact that the light rays are stopped by using an opaque liquid floating on the nutrient solution (84).

16. Process as in claim 1, characterised by the fact that the growing containers (5, 80) may be stacked up on each other so as to form a sort of 'Culture Tower'.

17. Process as in claim 1, characterised by the fact that the growing containers (5, 80) isolated or the 'towers' may be made to rotate.

18. Process as in claim 1, characterised by the fact that the light-reflecting systems may be installed above, around and between the growing containers (5, 80).

19. Process as in claim 1, characterised by the fact that the said process may be used in space and/or on celestial bodies.

20. Apparatus enabling the implementation of the process as in one or more of the above claims, is constituted by a collective container (5, 80) which contains a nutrient solution, substrates for the plants placed in the said container and means of moving along the plants distinct from the nutrient solution, which carry along the plants on or with the substrates so as to space out the plants on all their sides, characterised by the fact that:

    – the collective container may be of any shape,

    – the substrates may be constituted by one of the methods a) to d) mentioned in claim 1, and

    – the system of moving along the plants by one of the methods e) to h) in the same claim 1.

21. Apparatus as in claim 20, characterised by the fact that a silo (8) is filled at least partially with granulates (100), it is equipped with a compressed air induction (9), anti-delivery valves (17) and a system of piping (11) to the space (2, 2bis) between the bottom and the foundation (1, 1bis, 3) of the collective growing container (5) the upper part (3) of which is pierced with multiple holes or nozzles (4); at the end of the container are placed sieves (13) and bins (12, 12bis); the bottom of the same bins is collected to the silo (8) by a network of pipes (15, 15bis), automatic harvesting cylinders (19) may be used with the silos (8) either incorporated to the growing containers or separated from them.

22. Apparatus as in claim 20, characterised by the fact that one reservoir (110) with a foundation (117) the bottom (3) of which is pierced with nozzles (4) is at least partially filled with a mixture of granulates (100) and nutrient solution (84) and the fact that the means for shaking up may consist of one or more propellers (111) and one or more inductions of compressed air (112) with one or more ring areas or central areas (113, 113bis), obturated by one or more obturators (115) and poles or rods (116).

23. Apparatus as in claim 20, characterised by the fact that it is constituted by a network of radiating divergent wires (81) being drawn taut, which may be supported by stakes (85) spaced along them.

24. Apparatus as in claim 20, characterised by the fact that a carriage (90 to 97) movable on rails or guide-rails (91) by means of wheels or runners fixed to their bodyworks (92), which is itself used as a base for a system comprising a guide-rail (94) which run strips (90) equipped with a catch (96) the movement of which is controlled by one or more endless screws (93) driven by one or more engines (95), the first and/or last strip (90) may be equipped with a fine extension (97); each set (90, 93, 94, 95, 96, 97) may be activated with an ascending or descending movement.

25. Apparatus as in claim 20, characterised by the fact that another means of moving the plants along may be constituted by grooved cylinders or cylinders equipped with fingers.

26. Apparatus as in claim 20, characterised by the fact that a mobile metallic construction (23, 23bis) rotating around a mast (24) and/or at least one runner (26) which moves along one or more rail/guide-rails (25) with a basket (27) hung on runners (28) which may be moved along the entire length of the metallic construction (23, 23bis) and be raised or lowered as needed.

Fig. 1

Fig. 2

DETAIL A

DETAIL A1

0 156 749

Fig. 3

35

C

90
92

90
92 bis

C

6

35
bis

85

81

D

32
22

30

23
bis

27

5

35

32

6

5

7        30        7

DETAIL B1

4

4

DETAIL B2

B

A

COUPE A_B

23

**Fig . 4**

**Fig . 5**

Fig. 6

Fig. 7

Fig. 8

**Fig. 9**

Labels: 75, A, 72, 74, 73, B, 8

**Fig. 10**

Labels: 75, 2 Bis, 3, 5, 3, 4, 75, 74, 1 Bis, 72, 74, 72

Fig. 11

DETAIL E

86
81
14
85
83
82
85

90
92
91
85
90
DETAIL F
85
80
90
91
92
90
6
87

DETAIL E2

85    81    85

82

DETAIL E1

14  84  81  85  88

DETAIL F1

97    96    90    93    95    94    14

Fig. 12

87  6  84  90  88  85  91  90  92  14  94  89  90  81  85

31

Fig. 13